(19) Europäisches Patentamt
European Patent Office
Office européen des brevets

(11) **EP 1 939 237 A1**

(12) **EUROPEAN PATENT APPLICATION**
published in accordance with Art. 153(4) EPC

(43) Date of publication:
**02.07.2008 Bulletin 2008/27**

(21) Application number: **06797216.6**

(22) Date of filing: **31.08.2006**

(51) Int Cl.:
***C08G 63/78*** *(2006.01)*

(86) International application number:
**PCT/JP2006/317256**

(87) International publication number:
**WO 2007/026838 (08.03.2007 Gazette 2007/10)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.09.2005 JP 2005253286**
**07.09.2005 JP 2005259383**
**21.10.2005 JP 2005307326**
**08.05.2006 JP 2006129284**

(71) Applicant: **Mitsubishi Chemical Corporation**
**Minato-ku**
**Tokyo 108-0014 (JP)**

(72) Inventors:
• **KIMURA, Hisashi**
**Mie 510-8530 (JP)**
• **YOSHIDA, Michiko**
**Mie 510-8530 (JP)**

(74) Representative: **HOFFMANN EITLE**
**Patent- und Rechtsanwälte**
**Arabellastrasse 4**
**81925 München (DE)**

(54) **METHOD FOR PRODUCING POLYESTER**

(57)    A polyester having desired physical properties can be efficiently produced by producing polyester prepolymer particles having specific physical properties by a continuous process and performing the solid-phase polycondensation of the particles.

**Description**

Technical Field

The present invention relates to a method of producing a polyester, and more specifically, to (1) a method of producing a polyester, the method including: continuously producing polyester prepolymer particles having a relatively low molecular weight and suitable for solid-phase polycondensation, the polyester prepolymer particles each serving as a production intermediate in the production of a polyester, with a simplified melt polycondensation apparatus; and performing the solid-phase polycondensation of the polyester prepolymer particles obtained by the production method. (2) The present invention relates to a method of producing a polyester involving treating a low-molecular-weight polyester prepolymer in a solid state with heat to perform solid-phase polycondensation.
In addition, the present invention relates to a method of producing a high-molecular-weight polyethylene terephthalate by treating a low-molecular-weight polyethylene terephthalate in a solid state with heat, and more specifically, to (1) a method of producing a high-molecular-weight polyethylene terephthalate at a high speed by performing solid-phase polycondensation involving treating a low-molecular-weight polyethylene terephthalate prepolymer under predetermined conditions with heat in stages and (2) a method by which a high-molecular-weight polyethylene terephthalate can be produced within a shorter time period than that in the case of an ordinary method by treating a low-molecular-weight polyethylene terephthalate prepolymer under specific conditions with heat in stages to perform a solid-phase polycondensation reaction.

Because polyesters typified by a polyethylene terephthalate (which may hereinafter be abbreviated as "PET") are each excellent in, for example, mechanical, thermal, and electrical properties, the polyesters are widely used in fibers and molded articles in various applications such as a film, a sheet, and a bottle, and a demand for the polyesters has been growing.

Physical properties requested of the polyethylene terephthalate vary depending on the applications of the polyethylene terephthalate. A high-molecular-weight polyester to be used as a material for a container such as a bottle is typically produced by: subjecting a dicarboxylic acid and/or an ester formable derivative of the acid as a dicarboxylic acid component, and a diol component to an esterification reaction and/or an ester exchange reaction to produce a low-molecular-weight oligomer; and subjecting the oligomer to a melt polycondensation reaction and solid-phase polycondensation.

In a polyester production method widely performed on an industrial scale at present, a high-molecular-weight polyester is produced by: performing a melt polycondensation reaction to provide a polyester prepolymer having a relatively high molecular weight; and subjecting the prepolymer to solid-phase polycondensation. In this case, a horizontal reaction machine having plug flow property and provided with a complicated stirring blade is used in the final stage of the melt polycondensation in order that a polyester prepolymer having a relatively high molecular weight may be obtained.
On the other hand, for example, Patent Document 1 proposes, as a method of efficiently producing a polyester without using a reaction machine having such complicated structure as a melt polycondensation reactor, a method of producing a polyester including: performing a melt polycondensation reaction to provide a polyester prepolymer having a degree of polymerization of 5 to 35 and a relatively low molecular weight; crystallizing the prepolymer under a specific condition; and subjecting the crystal to a solid-phase polycondensation step. However, the method has not been always satisfactory owing to the following reasons: the crystallization under a specific condition in the method cannot be always applied to continuous production with ease, and the method requires a relatively long solid-phase polycondensation time.

In addition, various attempts have been proposed to control a solid-phase polycondensation rate in the production of a polyester. For example, Patent Document 2 discloses that the solid-phase polycondensation rate depends on the amount of a polycondensation catalyst and the terminal carboxyl group concentration of a prepolymer. The document discloses that the terminal carboxyl group concentration of the prepolymer is adjusted by changing a charging ratio between terephthalic acid and ethylene glycol in an esterification reaction, by adding an excessive amount of ethylene glycol with respect to an initial charging amount in a later stage of the reaction, or by adding a catalyst after a partial vacuum has been achieved in a melt polycondensation step. However, the application of the method to a method of continuously producing a polyester involves difficulty, and the method has not been always satisfactory in terms of a polycondensation rate.

Further, Patent Document 3 discloses that a crystallized polyethylene terephthalate polymer having a ratio between a carboxyl terminal group amount and a hydroxyl terminal group amount in a specific range is used upon solid-phase polycondensation of a low-molecular-weight polyethylene terephthalate. However, the method specifies such a condition that the carboxyl terminal group amount is relatively large, and, in any example of the document, the carboxyl terminal group amount is 165 eq/$10^6$ g (165 equivalents per one ton of a polyester prepolymer) or more. The document has no description concerning solid-phase polycondensation in such a region where a terminal carboxyl group concentration is small as in the case of the description.

Further, in the case of a PET, a required molecular weight (intrinsic viscosity) varies depending on the applications of the PET. For example, in ordinary cases, the intrinsic viscosity is 0.70 to 0.95 dL/g for a bottle, or is 0.95 to 1.20 dL/g for a tire cord.

Accordingly, the molecular weight (intrinsic viscosity) must be increased to a predetermined level in order that moldability and mechanical characteristics needed for the above applications may be derived from the PET. A method involving performing the solid-phase polycondensation of a PET prepolymer obtained by the melt polycondensation of a polyethylene terephthalate raw material subsequent to the melt polycondensation to turn the prepolymer into a polymer has been widely employed as a method on an industrial scale. The solid-phase polycondensation is typically performed by treating a PET prepolymer obtained by melt polycondensation with heat under an inert gas atmosphere or reduced pressure, but requires a relatively long time period for polymerization of the prepolymer to reach a predetermined molecular weight, so a production method additionally excellent in productivity has been desired. A method involving performing melt polycondensation to provide a PET prepolymer having a relatively low degree of polymerization and performing the solid-phase polycondensation of the prepolymer at a high temperature has been proposed as such method.

For example, Patent Document 4 discloses a method involving crystallizing a low-molecular-weight prepolymer having an average degree of polymerization of about 5 to 35 (an intrinsic viscosity of about 0.10 to 0.36 dL/g) obtained by melt polycondensation so that an apparent crystallite size is 9 nm or more and performing the solid-phase polycondensation of the crystal. However, according to our investigation, a satisfactory solid-phase polycondensation reaction rate cannot always be obtained by the method probably because a degree of polymerization at the time of the initiation of the solid-phase polycondensation is excessively low or the crystal grows to suppress the movement of a molecule of the prepolymer.

In addition, Patent Document 5 discloses that the solid-phase polycondensation of particles composed of a PET prepolymer having an intrinsic viscosity of 0.08 to 0.5 dL/g is performed at a temperature higher than the glass transition temperature of the prepolymer by 140°C or higher. In this case, however, a sufficient solid-phase polycondensation reaction rate cannot always be obtained when the prepolymer has an average particle diameter of about 1 mm or more, and the temperature range is such that the particles do not fuse with each other. Further, Patent Document 6 discloses a solid-phase polycondensation method in which higher priority is placed on the progress of polymerization than on the progress of crystallization, that is, a method involving: bringing low-molecular-weight PET prepolymer particles into contact with a heat transfer medium to increase the temperature of the particles to the temperature range of about 205°C to 240°C within less than 10 minutes; and performing the solid-phase polycondensation of the particles in a stream of an inert gas. However, the disclosed method involves applying a thermal impact to increase the temperature to the temperature range of about 205°C to 240°C within an extremely short time period, so the particles are apt to fuse with each other. To prevent the fusion, special contrivance must be made on a facility in order that the PET prepolymer particles may not contact with each other. In addition, the method cannot exert an effect of shortening a time period needed for a solid-phase polycondensation reaction. Therefore, the method is not always satisfactory owing to reasons including the above reasons.

On the other hand, Patent Document 7 discloses, in relation to a method involving performing the solid-phase polycondensation of PET to increase the molecular weight of PET, a heat treatment step involving the use of two or more continuous moving beds in the solid-phase polycondensation step. However, the disclosed technique involves increasing the temperature gradually of the particles of a PET prepolymer having an intrinsic viscosity of about 0. 5 to 0. 65 dL/g and a moderate molecular weight in order that the particles may not fuse with each other upon solid-phase polycondensation of the particles, and disclosed technique does not always improve a polycondensation reaction rate. In addition, a facility for melt polycondensation for obtaining the prepolymer having a moderate molecular weight is more expensive than a facility for obtaining a low-molecular-weight prepolymer, so the method is not always satisfactory from a comprehensive viewpoint.

Patent Document 1: JP Hei 10-512608 A
Patent Document 2: JP Sho 55-133421 A
Patent Document 3: JP 2000-204145 A
Patent Document 4: JP 3626758 B
Patent Document 5: JP 2004-67997 A
Patent Document 6: JP 2004-537622 A
Patent Document 7: US 5408035 B

Disclosure of the Invention

Problems to be solved by the Invention

An object of the present invention is to provide a method by which a high-molecular-weight, high-quality polyester adaptable to practical use as, for example, a container material can be efficiently produced without the use of a melt polycondensation reactor having a complicated structure within a relatively short solid-phase polycondensation time at a low cost.

Another object of the present invention is to provide a method of producing a polyester, including: treating low-molecular-weight polyester prepolymer particles with heat; and performing the solid-phase polycondensation of the particles at a high speed without causing the particles to fuse with each other.

Another object of the present invention is to provide an industrially useful production method by which a polyethylene terephthalate having an additionally high molecular weight can be efficiently produced by: treating low-molecular-weight polyethylene terephthalate prepolymer particles with heat; and performing the solid-phase polycondensation of the particles at a high polycondensation reaction rate without causing the fusion of the particles.

Means for solving the Problems

The inventors of the present invention have made extensive studies in view of the above-mentioned problems. As a result, the inventors have found that a polyester having desired physical properties can be efficiently produced by producing polyester prepolymer particles having specific physical properties by a continuous process and performing the solid-phase polycondensation of the particles. Thus, the inventors have reached a first invention. That is, the gist of the first invention is as described below.

A method of producing a polyester, including: (a) an esterification step of subjecting dicarboxylic acid components mainly composed of terephthalic acid and diol components mainly composed of ethylene glycol to an esterification reaction in the presence of an esterification reaction catalyst to provide an oligomer; (b) a melt polycondensation step of subjecting the resultant oligomer to a melt polycondensation reaction to provide a polyester prepolymer; (c) a granulation step of granulating the resultant polyester prepolymer to provide polyester prepolymer particles; and (d) a heat treatment step of subjecting the resultant polyester prepolymer particles to a solid-phase polycondensation reaction to provide the polyester, in which the method satisfies the following requirements 1) to 3):

1) each of the steps (a), (b), and (c) comprises a continuous process;
2) the polyester prepolymer particles obtained in the step (c) have an intrinsic viscosity of 0.18 dL/g or more to 0.40 dL/g or less; and
3) the polyester prepolymer particles obtained in the step (c) have a terminal carboxyl group concentration of 1 equivalent or more to 50 equivalents or less per one ton of the particles.

In addition, the inventors have found that a solid-phase polycondensation reaction rate at a high temperature is increased by preliminarily performing, prior to the performance of solid-phase polycondensation at the high temperature, solid-phase polycondensation at a temperature lower than the solid-phase polycondensation temperature of the above solid-phase polycondensation by 15°C or more. Thus, the inventors have reached a second invention.

That is, the gist of the second invention is as described below.

A method of producing a polyester includes performing a heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester, characterized in that the heat treatment is divided into n stages, and the following conditions are satisfied:

(1) a temperature ($T_j$) in a j-th stage of the heat treatment is 190°C or higher and 230°C or lower, and a value for an increase in intrinsic viscosity in the j-th stage is 0.03 dL/g or more;
(2) at least one combination of the j-th stage and a k-th stage of the heat treatment in which the temperature ($T_j$ (°C)) in the j-th stage and a temperature ($T_k$ (°C)) in the k-th stage satisfy the following (Eq. 1a) is present: (Eq. 1a) $T_j + 15 \leq T_k \leq 245$;
(3) a difference between an intrinsic viscosity upon completion of the j-th stage and an intrinsic viscosity upon initiation of the k-th stage in the combination of the j-th stage and the k-th stage is 0.10 dL/g or less; and
(4) n represents an integer of 2 or more, and j and k represent integers satisfying $1 \leq j < k \leq n$.

In addition, another gist of the second invention is as described below.

A method of producing a polyester including performing a heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester, is characterized in that: the heat treatment includes all of a first stage of crystallizing the polyester prepolymer at a temperature T1a (°C), a second stage of performing solid-phase polycondensation of the crystallized polyester prepolymer at a temperature T2a (°C), a third stage of increasing a temperature of the product obtained in the second stage to a temperature T3a (°C), and a fourth stage of performing solid-phase polycondensation of the product obtained in the third stage at a temperature T4a (°C) in the stated order;

a value for an increase in intrinsic viscosity in the second stage is 0.03 dL/g or more; a difference between an intrinsic viscosity upon completion of the second stage and an intrinsic viscosity upon initiation of the fourth stage is 0.10 dL/g or less; and the temperatures T1a, T2a, T3a, and T4a (°C) satisfy the following (Eq. 4a) to (Eq. 7a):

$$(Eq. \ 4a) \quad 100{\leq}T1a{\leq}200;$$

$$(Eq. \ 5a) \quad 190{\leq}T2a{\leq}230;$$

$$(Eq. \ 6a) \quad T4a{\leq}T3a{\leq}250;$$

and

$$(Eq. \ 7a) \quad T2a+15{\leq}T4a{\leq}245.$$

In addition, as a result of detailed investigation on a relationship between a temperature and a polycondensation reaction rate in a solid-phase polycondensation step, the inventors have found that the solid-phase polycondensation step is performed in stages, and a former step in the step, that is, a first-stage solid-phase polycondensation step is performed at a temperature lower than the temperature of a latter step, that is, a second-stage solid-phase polycondensation step by 15°C or more, whereby a solid-phase polycondensation reaction rate throughout the entirety of the first and second-stage solid-phase polycondensation steps increases. Thus, the inventors have reached a third invention.

That is, a gist of the third invention resides in a method of producing a polyethylene terephthalate including performing a heat treatment of a polyethylene terephthalate prepolymer having an intrinsic viscosity of 0.18 dL/g or more and 0.40 dL/g or less in a solid state to provide a polyethylene terephthalate having an intrinsic viscosity of 0.70 dL/g or more, characterized in that the heat treatment includes (1) a first-stage solid-phase polycondensation step and (2) a second-stage solid-phase polycondensation step below in the stated order:

(1) first-stage solid-phase polycondensation step; a step of treating the polyethylene terephthalate prepolymer with heat at a temperature (T1b) of 200°C or higher and 225°C or lower under an inert gas atmosphere or reduced pressure for an average residence time of 0.5 hour or more and 10 hours or less so that a value for an increase in intrinsic viscosity of the prepolymer is 0.03 dL/g or more; and
(2) second-stage solid-phase polycondensation step;
a step of treating the prepolymer after the first-stage solid-phase polycondensation step with heat at a temperature (T2b) of 215°C or higher and 240°C or lower under an inert gas atmosphere or reduced pressure for an average residence time of 2 hours or more,
provided that the temperatures T1b (°C) and T2b (°C) satisfy the following (Eq. 1b):

$$T1b+15{\leq}T2b \quad (Eq. \ 1b).$$

Further, the inventors have conducted detailed investigation on conditions in solid-phase polycondensation. As a result, the inventors have found that, when a method of producing a high-molecular-weight polyethylene terephthalate includes a "first-stage solid-phase polycondensation step", a "temperature increase step", and a "second-stage solid-phase polycondensation step" in the stated order, and temperature increase conditions in the temperature increase step are caused to fall within specific ranges, a reaction rate in the second-stage solid-phase polycondensation step increases, and the high-molecular-weight polyethylene terephthalate can be produced within a shorter time period than that in the case of an ordinary method. Thus, the inventors have reached a fourth invention. That is, the gist of the fourth invention is as described below.

A method of producing a polyethylene terephthalate including performing a heat treatment of a polyethylene terephthalate prepolymer having an intrinsic viscosity of 0.18 dL/g or more and 0.40 dL/g or less in a solid state to provide an intrinsic viscosity of 0.70 dL/g or more is characterized in that the heat treatment in the solid state includes a first-stage solid-phase polycondensation step, a temperature increase step, and a second-stage solid-phase polycondensation step in the stated order, and the respective steps satisfy the following conditions (1) to (3) :

(1) the first-stage solid-phase polycondensation step includes a step of treating the polyethylene terephthalate prepolymer with heat under an inert gas atmosphere or reduced pressure, and a temperature ($T1c$) of the heat treatment is 190°C or higher and 225°C or lower;
(2) the temperature increase step includes a step of increasing a temperature of the polyethylene terephthalate prepolymer after the first-stage solid-phase polycondensation step under an inert gas atmosphere or reduced pressure from a temperature equal to or lower than the temperature ($T1c$) of the heat treatment of the first-stage solid-phase polycondensation step to a temperature ($T2c$), the temperature of the polyethylene terephthalate prepolymer is increased from the temperature $T1c$ (°C) to ($T1c + 15$)°C within 30 minutes, and the temperatures $T1c$ (°C) and $T2c$ (°C) satisfy the following (Eq. 1c) and (Eq. 2c):

$$T1c+15 \leq T2c \quad (Eq. \ 1c),$$

and

$$205°C \leq T2c \leq 240°C \quad (Eq. \ 2c);$$

and
(3) the second-stage solid-phase polycondensation step includes a step of treating the polyethylene terephthalate prepolymer after the first-stage solid-phase polycondensation step and the temperature increase step with heat under an inert gas atmosphere or reduced pressure, and a temperature ($T3c$) of the heat treatment is 190°C or higher and 240°C or lower.

Effects of the Invention

According to the method of producing a polyester of the first invention, a high-molecular-weight, high-quality polyester having physical properties requested upon practical use as, for example, a material for a container such as a bottle can be produced without the use of a melt polycondensation reactor having a complicated structure within a short solid-phase polycondensation time. As a result, the polyester can be efficiently produced at a low cost, so the method of the first invention is an extremely industrially useful method.

According to the method of producing a polyester of the second invention, there can be provided a method of producing a polyester including performing the solid-phase polycondensation of low-molecular-weight polyester prepolymer particles at a high speed without causing the particles to fuse with each other. The polyester obtained by the method can find use in a wide variety of applications including beverage bottles and industrial fibers.

According to the method of producing a polyethylene terephthalate of the third invention, there can be provided a method of producing a PET, the method including performing the solid-phase polycondensation of low-molecular-weight PET prepolymer particles at a high polycondensation reaction rate without the fusion of the particles. The PET obtained by the method has a high molecular weight, and can be used in a wide variety of applications including beverage bottles and industrial fibers. In addition, the method is economically advantageous to a large extent because a low-molecular-weight PET prepolymer can be utilized, so a burden on a facility in a melt polycondensation step can be reduced.

According to the method of producing a polyethylene terephthalate of the fourth invention, a high-molecular-weight PET can be efficiently produced by performing the solid-phase polycondensation of low-molecular-weight PET prepolymer particles obtained by melt polycondensation at a high polycondensation reaction rate without the fusion of the particles.

That is, the method of producing a PET of the fourth invention is a method of efficiently producing a desired high-molecular-weight PET suitable for various applications by treating PET prepolymer particles obtained by melt polycondensation with heat under an inert gas atmosphere or reduced pressure, that is, progressing the polycondensation of the particles each in a solid state (solid-phase polycondensation). Requirements at that time are as follows: a low-molecular-weight PET prepolymer is used, and the solid-phase polycondensation is performed under predetermined conditions. The performance of the solid-phase polycondensation under conditions controlled to the predetermined conditions provides a larger polycondensation reaction rate in a high-molecular-weight region than that under conditions in a conventional method, that is, that in the case where the solid-phase polycondensation is performed in one stage at 190°C to 240°C. As a result, an improvement in productivity such as the shortening of a solid-phase polycondensation time or a reduction in quantity of heat needed for the polycondensation, and energy savings can be achieved.

Brief Description of the Drawings

Fig. 1 is a schematic view showing a heat treatment apparatus used in each of examples and comparative examples.
Fig. 2 is a schematic view showing a fusion test apparatus used in each of the examples and the comparative examples.

Description of Symbols

1: heat treatment tube
2: gas flow meter
3: nitrogen-introducing tube
4: nitrogen-preheating tube
5: oil bath
6: dispersion plate
7: sample layer
8: filter
9: gas purge port
10: branch
11: thermocouple
12: temperature gauge
21: heat treatment tube
22: gas flow meter
23: nitrogen-introducing tube
24: nitrogen-preheating tube
25: oil bath
26: dispersion plate
27: sample layer
28: filter
29: gas purge port
30: metal gauze
31: supporting column
32: pin
33: seat

Best Mode for carrying out the Invention

The method of producing a polyester of the first invention (which may hereinafter be referred to as "production method of the first invention") relates to a method of producing a polyester, the method including: (a) an esterification step of subjecting dicarboxylic acids component mainly composed of terephthalic acid and diol components mainly composed of ethylene glycol to an esterification reaction in the presence of an esterification reaction catalyst to provide an oligomer; (b) a melt polycondensation step of subjecting the resultant oligomer to a melt polycondensation reaction to provide a polyester prepolymer; (c) a granulation step of granulating the resultant polyester prepolymer to provide polyester prepolymer particles; and (d) a heat treatment step of subjecting the resultant polyester prepolymer particles to a solid-phase polycondensation reaction to provide the polyester, in which each of at least the steps (a), (b), and (c) is a continuous process.
The term "continuous process" as used herein is a term opposite to a batch process, and comprehends a state where processes in the respective steps (a), (b), and (c) are continuously performed and a state where the steps (a), (b), and (c) are performed as a series of continuous methods.
According to the production method of the first invention, each of at least the steps (a), (b) , and (c) is a continuous process, so polyester prepolymer particles each having stabilized quality in terms of, for example, an intrinsic viscosity and a terminal carboxyl group concentration are obtained. As a result, the quality of the polyester obtained through the step (d) can also be stabilized. In the production method of the first invention, furthermore, the step (d) is preferably a continuous process.

When none of the steps (a), (b), and (c) is performed by a continuous process and each of the steps is performed by, for example, a batch method, an esterification reaction is performed, a melt polycondensation reaction is subsequently performed, and, then a polyester prepolymer obtained by the reaction is granulated. However, upon granulation of the prepolymer into particles, the intrinsic viscosity of a prepolymer particle reduces and the terminal carboxyl group concentration of the prepolymer particle increases in accordance with an elapsed time from the initiation of the granulation, so polyester prepolymer particles having uniform quality are hard to obtain.

In the production method of the first invention, the polyester prepolymer particles obtained in the step (c) have an intrinsic viscosity of 0.18 dL/g or more to 0.40 dL/g or less. A lower limit for the intrinsic viscosity is preferably 0.19 dL/g, or more preferably 0.20 dL/g. An upper limit for the intrinsic viscosity is preferably 0.35 dL/g, or more preferably 0.32 dL/g. An intrinsic viscosity of the prepolymer particles of less than the lower limit is not preferable because of, for example, a time needed for the reaction in the heat treatment step (d) as a step subsequent to the step (c) lengthens. On the other hand, an intrinsic viscosity in excess of the upper limit is not preferable either because a complicated, expensive facility is needed; for example, a horizontal reaction machine having plug flow property must be used as a polycondensation reaction machine in the melt polycondensation step.

In addition, the polyester prepolymer particles obtained in the step (c) have a terminal carboxyl group concentration of 50 equivalents or less per one ton of the prepolymer particles, preferably 30 equivalents/ton or less, or more preferably 20 equivalents/ton or less. A terminal carboxyl group concentration in excess of the above value is not preferable because a solid-phase polycondensation rate tends to be small. A lower limit for the terminal carboxyl group concentration, which is preferably as small as possible, is practically 1 equivalent/ton in ordinary cases.

The term "dicarboxylic acid components mainly composed of terephthalic acid" as used in the production method of the first invention refers to the following dicarboxylic acid components: a terephthalic acid component accounts for 85 mol% or more, preferably 90 mol% or more, or more preferably 95 mol% or more of all dicarboxylic acid components to be used upon production of the polyester. When the content of the terephthalic acid component is below the range, the heat resistance of an article molded out of the resultant polyester such as a heat-resistant bottle tends to be poor. In addition, the term "diol components mainly composed of ethylene glycol" refers to a state where an ethylene glycol component accounts for 85 mol% or more, preferably 90 mol% or more, or more preferably 95 mol% or more of all diol components to be used upon production of the polyester.

Examples of a dicarboxylic acid component except terephthalic acid that can be used in the production method of the present invention include: aromatic dicarboxylic acids such as phthalic acid, isophthalic acid, dibromoisophthalic acid, sodium sulfoisophthalate, phenylenedioxydicarboxylic acid, 4,4'-diphenyldicarboxylic acid, 4,4'-diphenyletherdicarboxylic acid, 4,4'-diphenylketonedicarboxylic acid, 4,4'-diphenoxyethanedicarboxylic acid, 4,4'-diphenylsulfonedicarboxylic acid, and 2,6-naphthalenedicarboxylic acid; alicyclic dicarboxylic acids such as hexahydroterephthalic acid and hexahydroisophthalic acid; aliphatic dicarboxylic acids such as succinic acid, glutaric acid, adipic acid, pimelic acid, suberic acid, azelaic acid, sebacic acid, undecadicarboxylic acid, and dodecadicarboxylic acid; and ester formable derivatives thereof.

In addition, examples of a diol component except ethylene glycol include: diethylene glycol; aliphatic diols such as trimethylene glycol, tetramethylene glycol, pentamethylene glycol, hexamethylene glycol, octamethylene glycol, decamethylene glycol, neopentyl glycol, 2-ethyl-2-butyl-1,3-propanediol, polyethylene glycol, and polytetramethylene ether glycol; alicyclic diols such as 1,2-cyclohexanediol, 1,4-cyclohexanediol, 1,1-cyclohexanedimethylol, 1,4-cyclohexanedimethylol, and 2,5-norbornanedimethylol; aromatic diols such as xylylene glycol, 4,4'-dihydroxybiphenyl, 2,2-bis(4'-hydroxyphenyl)propane, 2,2-bis(4'-β-hydroxyethoxyphenyl)propane, bis(4-hydroxyphenyl)sulfone, and bis(4-β-hydroxyethoxyphenyl)sulfonic acid; and ethylene oxide adducts or propylene oxide adducts of 2,2-bis(4'-hydroxyphenyl)propane.

Further, one or two or more kinds of compounds each having three or more functional groups such as: polycarboxylic acids such as trimellitic acid and pyromellitic acid, and anhydrides of the acids; polyols such as trimethylolmethane, trimethylolethane, trimethylolpropane, pentaerythritol, glycerol, and hexanetriol; and hydroxycarboxylic acids such as malic acid and citric acid may be used as copolymerizable components as required for the purpose of, for example, adjusting the desired physical properties of the polyester to be obtained.

The production method of the first invention can be performed in conformance with a known method of producing a polyester except that: each of at least the steps (a) , (b) , and (c) is performed by a continuous process as described above; and the intrinsic viscosities and terminal carboxyl group concentration of the polyester prepolymer particles obtained in the step (c) are set to the above-mentioned predetermined values by appropriately adjusting reaction conditions in the process such as a reaction catalyst, a reaction temperature, a reaction pressure, and a reaction time.

Hereinafter, production conditions in the production method of the first invention will be described.
In the production method of the first invention, raw material slurry is typically prepared by mixing the dicarboxylic acid components and the diol components. The raw material slurry is prepared by mixing the dicarboxylic acid components mainly composed of terephthalic acid, and the diol components mainly composed of ethylene glycol, the copolymerizable components to be used as required, and the like in such a manner that a molar ratio of the diol components to the dicarboxylic acid components is 1.0 to 2.0. The molar ratio is preferably 1.05 to 1.8, or more preferably 1.1 to 1.6.

Next, the prepared raw material slurry is continuously transferred to an esterification step provided with one or multiple esterification reaction tanks, and is subjected to an esterification reaction under normal pressure to increased pressure under heat, whereby an oligomer is obtained (esterification step (a)).

In the production method of the first invention, an esterification reaction catalyst is preferably used in the esterification reaction because the use of the esterification reaction catalyst can not only increase a reaction rate but also reduce the terminal carboxyl group concentration of a polyester prepolymer to be obtained by the melt polycondensation of the produced oligomer.

An esterification catalyst is not particularly limited, and a known catalyst can be selected appropriately. Specific examples of the catalyst used for the esterification reaction include a tungsten compound and a titanium compound. As the tungsten compound, paratungstic acid, metatungstic acid, tungstic acid, silicatungstic acid, phosphorus tungstic acid, and salts thereof are exemplified. Of those, ammonium metatungstate, ammonium paratungstate, sodium tungstate, and tungstic acid are preferred, and ammonium metatungstate and ammonium paratungstate are particularly preferred.

Examples of the titanium compound include: tetraalkoxy titanates such as tetra-n-propyl titanate, tetra-i-propyltitanate, tetra-n-butyl titanate, tetra-n-butyl titanate tetramer, tetra-t-butyltitanate, and acetyl-tri-i-propyltitanate; titanium acetate; titanium oxalate; and titanium chloride. Of those, tetra-i-propyl titanate or tetra-n-butyl titanate is preferable, and tetra-n-butyl titanate is particularly preferable.

Reaction conditions in the above esterification reaction are set as described below. In the case of a single esterification reaction tank, a temperature is set to about 240 to 290°C, a pressure is set to about 0 to 400 kPaG (0 to 4 kg/cm$^2$G) , and the reaction is performed for a time period (residence time) of about 1 to 10 hours under stirring. In addition, in the case of multiple esterification reaction tanks, a reaction temperature in a first-stage esterification reaction tank is set to typically 240 to 270°C, or preferably 245 to 265°C, a pressure in the first-stage esterification reaction tank is set to typically 5 to 300 kPaG (0.05 to 3 kg/cm$^2$G), or preferably 10 to 200 kPaG (0.1 to 2 kg/cm$^2$G), a reaction temperature in the final-stage esterification reaction tank is set to typically 250 to 290°C, or preferably 255 to 280°C, and a pressure in the final-stage esterification reaction tank is set to typically 0 to 150 kPaG (0 to 1.5 kg/cm$^2$G), or preferably 0 to 130 kPaG (0 to 1. 3 kg/cm$^2$G) . Here, the symbol "kPaG" represents a pressure relative to the atmospheric pressure in kPa units.

In the production method of the first invention, the esterification ratio of the oligomer as an esterification reaction product (ratio of carboxyl groups that have reacted with the diol components to esterify to all carboxyl groups of the dicarboxylic acid components as raw materials) is preferably 90% or more, or more preferably 94% or more.

Subsequently, the oligomer obtained in the esterification step (a) is continuously transferred to the melt polycondensation step provided with a polycondensation reaction tank, and is subjected to a melt polycondensation reaction under reduced pressure and heat (melt polycondensation step (b)). The melt polycondensation reaction can be performed by a continuous process in one or multiple stages; a prepolymer having desired physical properties can be obtained in one or two stages in ordinary cases, or one stage in some cases.

In the production method of the first invention, the intrinsic viscosity of the polyester prepolymer obtained by the melt polycondensation reaction is adjusted to such a low value that particles obtained by granulating the prepolymer have an intrinsic viscosity of 0.40 dL/g or less, or preferably 0.35 dL/g or less. Accordingly, horizontal, plug flow type second- and third-stage polycondensation reaction tanks each of which: is provided with a stirring blade for a high viscosity; and has been widely used heretofore for obtaining a high-molecular-weight prepolymer are not necessarily required, so the melt polycondensation step is simplified, a cost for a facility to be used in the step can be reduced, and, furthermore, the step can be performed with a single perfect mixing type reaction tank provided with a stirring blade.

A melt polycondensation reaction catalyst prepolymer is not particularly limited, and a known catalyst can be used. Specific examples of the catalyst include: germanium compounds such as germanium dioxide, germanium tetroxide, germanium hydroxide, germanium oxalate, germanium tetraethoxide, and germanium tetra-n-butoxide; antimony compounds such as antimony trioxide, antimony pentoxide, antimony acetate, and methoxyantimony; and titanium compounds such as tetra-n-propyl titanate, tetra-i-propyl titanate, tetra-n-butyl titanate, titanium oxalate, and potassium titanium oxalate. One kind of them is used alone, or two or more kinds of them are used in combination. Of those, a titanium compound is preferably used because of its high polycondensation reaction activity. The catalyst is typically used in an amount of 1 to 400 massppm with respect to a polyester prepolymer to be obtained.

In addition, a phosphorus compound such as orthophosphoric acid, an alkyl orthophosphate, ethyl acid phosphate, triethylene glycol acid phosphate, phosphorous acid, or an alkyl phosphite can be used as a stabilizer. The stabilizer is used in an amount of preferably 1 to 1,000 massppm, or particularly preferably 2 to 200 massppm with respect to the polyester prepolymer to be obtained.

Further, a compound of an alkali metal or of an alkaline earth metal, such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst. The compound is typically used in an amount of 1 to 100 massppm with respect to the PET prepolymer to be obtained.

Reaction conditions in the melt polycondensation reaction by a continuous process are typically as follows: a temperature is 260 to 290°C, or preferably 270 to 280 °C; and a pressure is 100 to 0.1 kPaA, or preferably 50 to 0.1 kPaA. A reaction time (residence time) in the reaction, which depends on the temperature and the pressure, has only to be adjusted in such a manner that polyester prepolymer particles obtained by granulating the polyester prepolymer obtained in the melt polycondensation step in the granulation step to be described later have an intrinsic viscosity in the above-mentioned predetermined range, and the time is typically about 0.5 to 3 hours. Here, the symbol "kPaA" represents an absolute pressure in kPa units.

When the melt polycondensation reaction is performed in multiple stages, for example, two stages, the reaction is performed under the following conditions: a temperature in a first stage is 260 to 280°C, a pressure in the first stage is 100 to 1 kPaA, a temperature in a second stage is 270 to 290°C, and a pressure in the second stage is 10 to 0.1 kPaA. The reaction is preferably performed at a temperature of at least 270°C or higher in the final phase of the second stage in order that a polymerization reaction may be sufficiently performed.

Subsequently, the polyester prepolymer obtained in the melt polycondensation step (b) is continuously granulated in the granulation step (c), whereby particles are obtained. A lower limit for the intrinsic viscosity of polyester prepolymer particles obtained as a result of the granulation is 0.18 dL/g, preferably 0.19 dL/g, or more preferably 0.20 dL/g. An upper limit for the intrinsic viscosity is 0.40 dL/g, preferably 0.35 dL/g, or more preferably 0.32 dL/g.

Inaddition, the polyester prepolymer particles have a terminal carboxyl group concentration of 50 equivalents or less per one ton of the prepolymer particles, preferably 30 equivalents/ton or less, or more preferably 20 equivalents/ton or less. A lower limit for the terminal carboxyl group concentration, which is preferably as small as possible, is practically 1 equivalent/ton in ordinary cases

The intrinsic viscosity and terminal carboxyl group concentration of the above prepolymer particles are essentially equal to those of the prepolymer obtained in the melt polycondensation step (b).

In the production method of the first invention, each of a dropping method and a strand cut method can be suitably adopted as a granulation method in the granulation step (c) . The dropping method is a method involving: dropping a polyester prepolymer in a molten state obtained by a melt polycondensation reaction in a strand shape from a nozzle head directed vertically downward into a gas; granulating the prepolymer by means of a gravitational acceleration; and solidifying the granulated product by heat exchange with an atmospheric gas to provide particles. In ordinary cases, the method can be preferably adopted when a prepolymer having an intrinsic viscosity of 0.25 dL/g or less, or preferably 0.20 dL/g or less is turned into particles. Of the dropping methods, in particular, a method involving applying a vibration to a polyester prepolymer (see, for example, Japanese Patent Translation Publication No. 2003-531259) can be preferably adopted. The application of a vibration can shorten a distance along which the strand falls needed for granulating the strand, so the size of an entire apparatus can be reduced.

In the dropping method, in order that a length (distance) along which the prepolymer falls needed for the solidification may be shortened, the following procedure may be adopted: a water bath or the like is provided for the point at which the prepolymer falls; and the prepolymer is cooled with a liquid such as water to solidify. When a water bath is provided, in order that solidified particles may be prevented from fusing with each other, water in the water bath is preferably provided with a flow velocity. A method of providing water with a flow velocity is not particularly limited; in the case of, for example, a polyester having a specific gravity in excess of 1 such as a polyethylene terephthalate, such a structure that water is flowed from the entirety of the upper portion of a funnel-like water bath, and slurry composed of water and prepolymer particles is discharged from a point around the center of the lower portion of the bath, or such a structure that water is flowed from the entirety of the upper portion of an inclined plane, and slurry composed of water and prepolymer particles is recovered at the lower portion of the plane is preferable. In addition, a method involving dropping a prepolymer onto, for example, a rotating metal belt and cooling the prepolymer to solidify the prepolymer can also be adopted. The adoption of such method can efficiently provide polyester prepolymer particles.

On the other hand, the strand cut method is a method involving: ejecting a polyester prepolymer in a molten state produced by a melt polycondensation reaction from a die plate having multiple pores (die holes) into a vapor phase through a gear pump or the like to turn the prepolymer into a strand shape; and cutting the prepolymer with rotary teeth each having a rotating shaft substantially perpendicular to the direction in which the prepolymer is ejected and with fixed teeth while or after cooling the prepolymer with water to provide particles. In ordinary cases, the method can be preferably adopted when a prepolymer having an intrinsic viscosity of 0.18 dL/g or more, or preferably 0.20 dL/g or more is turned into particles.

In the strand cut method, the linear velocity of the molten polyester prepolymer upon ejection of the prepolymer from the die hole in a strand shape is preferably 0.1 m/sec or more and 3m/sec orless. In addition, the strand-shaped polyester prepolymer introduced to the rotary teeth and the fixed teeth must be solidified to such an extent that the prepolymer can be cut. The phrase "solidified to such an extent that the prepolymer can be cut" refers to a state where the prepolymer is solidified by cooling the surface temperature of the strand to a temperature equal to or lower than the glass transition temperature of the polyester prepolymer, or preferably a temperature lower than the glass transition temperature by at least 5°C. For example, when the polyester prepolymer is a polyethylene terephthalate, the surface temperature of the strand has only to be cooled to 75°C or lower, or preferably 70°C or lower. Accordingly, in ordinary cases, the temperature of water to be used is appropriately selected from the range of 5°C or higher to 90°C or lower depending on, for example, the temperature of the polyester prepolymer at the time of melting, the melting point, softening point, or glass transition point of the prepolymer, or the thickness of the strand. In particular, when the polyester prepolymer is a polyethylene terephthalate, a lower limit for the temperature of water is more preferably 10 °C, and an upper limit for the temperature is more preferably 65°C.

In the production method of the first invention, the particles have an average particle diameter of preferably 0.1 to 3.0 mm. A lower limit for the average particle diameter is more preferably 0. 5 mm, or particularly preferably 0.65 mm. Meanwhile, an upper limit for the average particle diameter is more preferably 2.0 mm, still more preferably 1.8 mm, or particularly preferably 1.6 mm. When the average particle diameter is less than 0.1 mm, the amount of a fine powder increases upon granulation of the prepolymer, so a trouble is apt to occur in any subsequent step during the transfer of the particles. An average particle diameter in excess of 3.0 mm is not preferable because a solid-phase polycondensation time needed for producing a high-molecular-weight polyester having a desired intrinsic viscosity tends to be extremely long. Here, the average particle diameter of the particles is determined as follows: a cumulative distribution curve is created by a dry sieving test method described in JIS K0069; and the value at which a cumulative percentage reaches 50% is defined as the average particle diameter.

In the production method of the first invention, a specific method for the heat treatment step (d) is not particularly limited, and the step is performed in conformance with a known method. For example, the polyester prepolymer particles obtained in the granulation step (c) are crystallized by being fluidized in a stream of, for example, an inert gas at 120 to 180°C for 0.5 to 12 hours as required and dried, and then the particles can be continuously subjected to solid-phase polycondensation in a moving bed in which an inert gas circulates at a temperature of typically 180°C or higher and lower than the melting point of a polyester to be produced by at least 5°C. A solid-phase polycondensation time has only to be set depending on the desired intrinsic viscosity of the polyester to be produced, and is typically about 1 to 50 hours. A lower limit for the intrinsic viscosity of the polyester after the solid-phase polycondensation is typically 0.70 dL/g, preferably 0.72 dL/g, or more preferably 0.74 dL/g, and an upper limit for the intrinsic viscosity is typically 1.50 dL/g, preferably 1.45 dL/g, or more preferably 1.40 dL/g. An intrinsic viscosity of the polyester obtained by the production method of the first invention after the solid-phase polycondensation in the range is more preferable because an article molded out of the polyester is excellent in mechanical strength and melt moldability. The above heat treatment step (d) can be performed by a heat treatment in the second, third, or fourth invention.

The polyester to be obtained by the method of the first invention can be turned into a bottle to be used for, for example, packaging a beverage by: molding the polyester into a preform by injection molding or extrusion molding; and subjecting the preform to stretch blow molding. In addition, the polyester can be turned into a bottle by direct blow molding. In addition, the polyester can be turned into a film or a sheet by extrusion molding or stretch molding to be used in various applications including packaging materials. In addition, the polyester can be turned into a fiber by extrusion/stretch molding.

The method of producing a polyester of the second invention (whichmay hereinafter be referred to as "production method of the second invention") relates to a method of efficiently producing a polyester suitable for molding by: treating a polyester prepolymer obtained by melt polycondensation in a solid state with heat under an inert gas atmosphere or reduced pressure; and progressing the polycondensation (solid-phase polycondensation) of the prepolymer, and is characterized in that, at the time of the production, a low-molecular-weight prepolymer is used, solid-phase polycondensation is performed once at a relatively low temperature, and then the temperature is increased by 15°C or higher and solid-phase polycondensation is performed at a relatively high temperature until a polyester having a predetermined molecular weight is obtained. Such method provides a larger polycondensation reaction rate in a high-molecular-weight region than that in the case where the solid-phase polycondensation is initiated at a relatively high temperature. The reason for the foregoing is unclear, but the reason is assumed to be as described below. That is, when the prepolymer is crystallized at a low molecular weight, a crystal structure is formed, whereby the mobility of a polyester molecular chain reduces, and part of terminal groups are inactivated. In particular, when the prepolymer is crystallized at a low molecular weight, the absolute value for the number of terminal groups to be inactivated increases, so a polycondensation reaction rate reduces in the latter half of the solid-phase polycondensation. In contrast, when the prepolymer is treated with heat during the crystallization so that its temperature is increased by 15°C or higher, the prepolymer maintains a solid state, but the melting and recrystallization of the crystal occur, and an amorphous region where a large number of terminal groups are present is formed again, whereby part of inactivated terminal groups recover their activity, and the polycondensation reaction rate increases.

The production method of the second invention is a method of producing a polyester, and including performing the heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester, and the method being characterized in that the heat treatment is divided into n stages, and specific conditions are satisfied.

The heat treatment in the production method of the second invention means a step including a drying step, a temperature increase step, a crystallization step, and a solid-phase polycondensation step and intended for the treatment of a polyester prepolymer in a solid state under a temperature condition exceeding normal temperature.

In addition, in the production method of the second invention, an intrinsic viscosity is used as an indicator for the molecular weight of a polyester.

Hereinafter, details about the second invention will be described.

The polyester prepolymer to be used in the production method of the second invention can be produced by employing, for example, a conventional method for the production of a polyester prepolymer. To bespecific,the prepolymer can be typicallyproduced by: subjecting a dicarboxylic acid and/or an ester formable derivative of the dicarboxylic acid, and a diol to an esterification reaction and/or an ester exchange reaction; and subjecting the resultant to melt polycondensation using a polycondensation catalyst. Details about the foregoing are as described below. For example, the polyester prepolymer is obtained by: loading a dicarboxylic acid and a diol into a slurry preparation tank; stirring and mixing the components to prepare raw material slurry; subjecting the slurry to an esterification reaction in an esterification reaction tank under normal pressure to increased pressure and heat while removing, for example, water produced by the reaction by distillation; transferring the resultant polyester low-molecular-weight body (oligomer) as an esterification reaction product to a polycondensation tank; and subjecting the oligomer to melt polycondensation using a polycondensation catalyst under reduced pressure and heat.

A catalyst to be used in the above esterification or ester exchange reaction, and a catalyst to be used in the polycondensation reaction are not particularly limited, and a catalyst appropriately selected from known catalysts can be used in any such reaction.

Specific examples of the catalyst to be used in any such reaction include those exemplified in the above production method of the first invention. The above catalyst is typically used in an amount of 1 to 400 massppm with respect to a polyester prepolymer to be obtained. It should be noted that a titanium compound acts as an esterification catalyst and/or an ester exchange catalyst. The titanium catalyst is preferably used in any such reaction in an amount in the range.

In addition, a phosphorus compound such as orthophosphoric acid, an alkyl orthophosphate, ethyl acid phosphate, triethylene glycol acid phosphate, phosphorous acid, or an alkyl phosphite can be used as a stabilizer. The stabilizer is used in an amount of preferably 1 to 1,000 massppm, or particularly preferably 2 to 200 massppm with respect to the polyester prepolymer to be obtained.

Further, a compound of an alkali metal or of an alkaline earth metal such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst. The compound is typically used in an amount of 1 to 100 massppm with respect to the polyester prepolymer to be obtained.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol.

It should be noted that those operations are performed by one or more of a continuous method, a batch method, and a semi-batch method, and each of the esterification reaction tank (or an ester exchange reaction tank) and a melt polycondensation reaction tank may be composed of one stage or multiple stages.

A polyester prepolymer particularly preferably applicable to the production method of the second invention is, for example, a polyethylene terephthalate prepolymer and/or a polybutylene terephthalate prepolymer. Those prepolymers are each a polyester prepolymer typically produced by: composing the dicarboxylic acid mainly of terephthalic acid and/or dimethyl terephthalate; and composing the diol mainly of ethylene glycol and/or 1,4-butanediol.

The above phrase "composing ~ mainly of" as used herein refers to a state where terephthalic acid and/or dimethyl terephthalate accounts for 85 mol% or more, preferably 90 mol% or more, or more preferably 95 mol% or more of all dicarboxylic acid components, and ethylene glycol and/or 1,4-butanediol accounts for 85 mol% or more, preferably 90 mol% or more, or more preferably 95 mol% or more of all diol components.

A dicarboxylic acid component except terephthalic acid described above is similar to that used in the above production method of the first invention.

A diol component except ethylene glycol and 1,4-butanediol described above is similar to that used in the above production method of the first invention.

The polyester obtained by the above melt polycondensation reaction is supplied to a die head connected to the melt polycondensation reaction tank through a pipe and/or a gear pump and/or a filter, and is ejected from multiple die holes provided for the tip of a die in a strand shape or a drop shape. The ejected polyester is granulated with, for example, a strand cutter, whereby the polyester prepolymer to be used in the production method of the second invention can be obtained.

The above polyester prepolymer to be used in the production method of the second invention has an average particle diameter of preferably 0.5 mm or more to 3.0 mm or less in ordinary cases. The average particle diameter is more preferably 0.6 mm or more, or particularly preferably 0.65 mm or more. Meanwhile, the average particle diameter is more preferably 2.0 mm or less, still more preferably 1.8 mm or less, or particularly preferably 1.6 mm or less. When the average particle diameter is less than 0.5 mm, the amount of a fine powder increases upon granulation of the prepolymer, so a trouble is apt to occur in any subsequent step during the transfer of the particles. When the average particle diameter exceeds 3.0 mm, a needed solid-phase polycondensation reaction time becomes extremely long irrespective of the presence or absence of an effect of the second invention.

In the case of granulation with, for example, a strand cutter, the polyester prepolymer having an average particle diameter in the above range can be obtained by adjusting a die wheel diameter, the ejection amount of the prepolymer, and the take-up speed of a strand.

The average particle diameter of the particles is determined as follows: a cumulative distribution curve is created by a dry sieving test method in accordance with JIS K0069, and the value at which a cumulative percentage reaches 50% is defined as the average particle diameter.

The polyester prepolymer to be used in the production method of the second invention has an intrinsic viscosity of 0.18 or more to 0. 4 0 dL/g or less. A lower limit for the intrinsic viscosity is preferably 0.20 dL/g or more. On the other hand, an upper limit for the intrinsic viscosity is preferably 0. 38 dL/g, or particularly preferably 0.35 dL/g or less. An intrinsic viscosity of less than 0.18 dL/g is not preferable because a fine powder is apt to be produced upon granulation of the prepolymer, and a needed solid-phase polycondensation time becomes extremely long even in the case where the effect of the second invention is taken into consideration. When the intrinsic viscosity exceeds 0.40 dL/g, an expensive facility is needed for stirring a highly viscous liquid and for subjecting the liquid to a high-vacuum reaction in a melt polycondensation step, with the result that the effect of the second invention is reduced.

The polyester prepolymer having an intrinsic viscosity in the above range can be obtained by controlling a polycondensation reaction temperature, a polycondensation reaction time, and a degree of decompression.

The polyester prepolymer to be used in the production method of the second invention has a terminal carboxyl group concentration of preferably 100 equivalents/ton or less, more preferably 70 equivalents/ton or less, still more preferably 40 equivalents/ton or less, or particularly preferably 20 equivalents/ton or less. When the terminal carboxyl group concentration exceeds 100 equivalents/ton, a polycondensation reaction rate tends to be small in a solid-phase polycondensation step as a subsequent step.

In addition, the above terminal carboxyl group concentration (AV) can be measured by: dissolving a sample in a solvent; and titrating the solution with sodium hydroxide.

Further, the above terminal carboxyl group concentration (AV) can be controlled on the basis of a temperature, a pressure, a mixed state of the components, or a method of adding a catalyst or ethylene glycol in an esterification reaction step and/or a polycondensation reaction step.

The polyester prepolymer obtained as described above is treated in a solid state with heat, and is subjected to polycondensation so as to have a predetermined intrinsic viscosity by the production method of the second invention. The heat treatment in the production method of the second invention is divided into multiple (n) steps such as temperature increase, crystallization, solid-phase polycondensation, and another temperature increase. The heat treatment in the production method of the second invention, which can be performed by a batch method, is preferably performed in a continuous manner in terms of production efficiency.

In addition, the production method of the second invention is a method of producing a polyester, and including performing the heat treatment of the above polyester prepolymer in a solid state to increase the intrinsic viscosity of the polyester prepolymer by 0.50 dL/g or more to obtain the polyester. The above increase in intrinsic viscosity by the heat treatment is preferably 0.53 dL/g or more, more preferably 0.55 dL/g or more, or particularly preferably 0.58 dL/g or more. Meanwhile, the above increase in intrinsic viscosity is typically 2.00 dL/g or less.

When the above increase in intrinsic viscosity is less than 0.50 dL/g, an effect of the second invention of increasing a solid-phase polycondensation rate does not lead to an improvement in productivity.

The solid-phase polycondensation step of the above heat treatment has at least two stages, that is, a j-th stage and a k-th stage downstream of the j-th stage, and at least one combination of the j-th stage and the k-th stage in which a temperature ($T_j$ (°C)) in the j-th stage and a temperature ($T_k$ (°C)) in the k-th stage satisfy (Eq. 1a) $T_j + 15 \leq T_k \leq 245$ is present. Further, j and k described above represent integers satisfying $1 \leq j < k \leq n$, and n represents an integer of 2 or more.

The temperature $T_j$ in the above j-th stage is 190°C or higher and 230°C or lower. A lower limit for $T_j$ is preferably 200°C. Meanwhile, an upper limit for $T_j$ is preferably 220°C, or more preferably 215°C. In the case where the above lower limit is lower than 190°C, a solid-phase polycondensation rate in the j-th stage becomes small, and a load in the k-th stage as a subsequent step becomes large. The case where the above upper limit exceeds 230°C is inconvenient because the temperature $T_k$ in the k-th stage exceeds 245°C, and, for example, the fusion of the polyester particles is apt to occur. In addition, as described above, the range of $T_k$ is represented as (Eq. 1a) $T_j + 15°C \leq T_k \leq 245°C$. When $T_k$ is

lower than Tj + 15°C, an effect of improving a solid-phase polycondensation rate of the second invention cannot be obtained.

An increase in intrinsic viscosity in the above j-th stage is 0.03 dL/g or more, or preferably 0.05 dL/g or more. When the increase is less than 0.03 dL/g, an effect of increasing a solid-phase polycondensation rate in the k-th stage cannot be sufficiently obtained. An upper limit for the increase in intrinsic viscosity in the j-th stage has only to be set in order that a time period for the entirety of the heat treatment may be shortest and/or a quantity of heat to be inputted may be minimum, and is typically about 0.30 dL/g or less, preferably about 0.25 dL/g or less, or more preferably about 0.20 dL/g or less.

In addition, a difference in intrinsic viscosity between the polyester upon completion of the above j-th stage and the polyester upon initiation of the k-th stage is 0. 10 dL/g or less, or preferably 0.05 dL/g or less. A difference in excess of 0.10 dL/g is not preferable because a heat treatment time from the completion of the j-th stage to the initiation of the k-th stage lengthens, with the result that the effect of the second invention obtained by increasing the temperature in the j-th stage to the temperature in the k-th stage within a short time period is not exerted.

Further, the above j-th stage and/or the above k-th stage is preferably performed in a moving bed, in particular, a continuous moving bed.

An h-th stage (temperature increase step) is preferably provided between the above j-th stage and the above k-th stage in order that transfer from the j-th stage to the k-th stage may be smoothly performed. A temperature Tha (°C) in the h-th stage preferably satisfies (Eq. 3a) Tk ≤ Tha ≤ 250°C. Setting Tha to be equal to or higher than Tk can reduce the frequency at which the polyester particles fuse with each other in the k-th stage. In addition, of course, each of Tj, Tha, and Tk is equal to or lower than the melting point of the polyester of the second invention. A residence time in the h-th stage has only to be set in order that a difference in intrinsic viscosity between the polyester upon completion of the j-th stage and the polyester upon initiation of the k-th stage is 0.10 dL/g or less, and is typically 90 minutes or less, preferably 60 minutes or less, or more preferably 40 minutes or less. When the above residence time of the temperature increase step falls within the above range, the production method of the second invention exerts a significant effect of shortening a solid-phase polycondensation reaction time. A facility to be used in the h-th stage is not particularly limited as long as the facility can heat, and increase the temperature of the polyester particles; the stage is preferably performed in a fluidized bed using an inert gas because, for example, the fusion of the particles occurs at a low frequency.

A c-th stage (crystallization step) involving the crystallization of at least part of the polyester prepolymer substantially in an amorphous state is preferably present prior to the j-th-stage solid-phase polycondensation step in the above heat treatment. The crystallization of at least part of the polyester prepolymer in an amorphous state can alleviate the fusion of the polyester particles in a subsequent step such as the j- or k-th stage. A temperature Tca (°C) in the above c-th stage preferably satisfies the following formula: 100 ≤ Tca ≤ 200°C. When Tca is lower than 100°C, it requires a long time to crystallize the polyester prepolymer particles to such an extent that the particles do not fuse with each other, so the effect of the second invention is reduced. When Tca exceeds 200°C, the fusion of the polyester prepolymer particles tends to occur in the c-th stage. A facility to be used in the c-th stage is not particularly limited as long as the facility can heat the polyester prepolymer particles; the stage is preferably performed in a fluidized bed using an inert gas because, for example, the fusion of the particles occurs at a low frequency.

In addition, a step of increasing the temperature of the polyester prepolymer to Tca can be provided before the c-th stage, or an increase in temperature and the crystallization of the polyester prepolymer may be performed in the c-th stage. In addition, the polyester prepolymer particles may be dried in the c-th stage. The polyester prepolymer particles may be dried in an initial stage of the solid-phase polycondensation.

Examples of an additionally preferable method of dividing the heat treatment in the production method of the second invention and temperature conditions for the steps obtained as a result of the division will be described. That is, it is preferable that: the above heat treatment include all of a first stage of crystallizing at least part of the polyester prepolymer substantially in an amorphous state at a temperature T1a (°C), a second stage of performing the solid-phase polycondensation of the crystallized polyester prepolymer at a temperature T2a (°C), a third stage of increasing the temperature of the product obtained in the second stage to a temperature T3a (°C), and a fourth stage of performing the solid-phase polycondensation of the product obtained in the third stage at a temperature T4a (°C) in the stated order; a value for an increase in intrinsic viscosity in the second stage be 0.03 dL/g or more; a difference between an intrinsic viscosity upon completion of the second stage and an intrinsic viscosity upon initiation of the fourth stage be 0.10 dL/g or less; and T1a, T2a, T3a, and T4a (°C) satisfy the following (Eq. 4a) to (Eq. 7a):

$$(\text{Eq. 4a}) \quad 100 \leq T1a \leq 200;$$

$$(Eq. 5a) \quad 190 \leq T2a \leq 230;$$

$$(Eq. 6a) \quad T4a \leq T3a \leq 250;$$

and

$$(Eq. 7a) \quad T2a+15 \leq T4a \leq 245.$$

The polyester to be obtained by the production method of the second invention can be suitably used as a raw material to be molded into, for example, a fiber, a film, or a bottle. In particular, the polyester can be turned into a bottle to be used for, for example, packaging a beverage by: molding the polyester into a preform by injection molding or extrusion molding; and subjecting the preform to stretch blow molding. In addition, the polyester can be turned into a bottle by direct blow molding.

In addition, the polyester can be turned into a film or a sheet by extrusion molding or stretch molding to be used in various applications including packaging materials. In addition, the polyester can be turned into a fiber by extrusion/ stretch molding.

The method of producing a PET of the third invention (which may hereinafter be referred to as "production method of the third invention") relates to a method of efficiently producing a PET having a desired high molecular weight and suitable for molding by treating PET prepolymer particles obtained by melt polycondensation with heat under an inert gas atmosphere or reduced pressure, that is, progressing the polycondensation of the particles each in a solid state (solid-phase polycondensation). Requirements at that time are as follows: a low-molecular-weight PET prepolymer is used, and the solid-phase polycondensation is performed under the above-mentioned predetermined conditions in stages. The method to be performed under conditions controlled to the predetermined conditions provides a larger polycondensation reaction rate in a high-molecular-weight region than that in the case where the solid-phase polycondensation is initiated at a high temperature in a conventional method, in other words, the temperature in the second-stage solid-phase polycondensation step of the production method of the third invention. As a result, an improvement in productivity, such as the shortening of a solid-phase polycondensation time or a reduction in quantity of heat needed for the polycondensation can be achieved.

The heat treatment in the production method of the third invention means a step including a drying step, a temperature increase step, a crystallization step, and a solid-phase polycondensation step and intended for the treatment of a PET prepolymer in a solid state under a temperature condition exceeding normal temperature. In addition, in the third invention, an intrinsic viscosity is used as an indicator for the molecular weight of a PET.

Hereinafter, details about the third invention will be described.

A method of obtaining a PET prepolymer to be used in the production method of the third invention is not particularly limited, and the prepolymer can be produced by a conventional production method for a PET. To be specific, the prepolymer is typically produced by: subjecting dicarboxylic acid components mainly composed of terephthalic acid and/or an ester formable derivative of the terephthalic acid, and diol components mainly composed of ethylene glycol to an esterification reaction and/or an ester exchange reaction in the presence of an esterification or ester exchange catalyst as required; and subjecting the resultant to melt polycondensation using a polycondensation catalyst. Details about the foregoing are as described below. For example, a PET is obtained by: loading a dicarboxylic acid component and a diol component as raw materials into a slurry preparation tank; stirring and mixing the components to prepare raw material slurry; subjecting the slurry to an esterification reaction in an esterification reaction tank under normal pressure to increased pressure and heat while removing, for example, water produced by the reaction by distillation; transferring the resultant PET low-molecular-weight body (oligomer) as an esterification reaction product to a polycondensation tank; and subjecting the oligomer to melt polycondensation using a polycondensation catalyst under reduced pressure and heat.

In the production method of the third invention, the phrase "mainly composed of terephthalic acid" refers to a state where terephthalic acid and/or an ester formable derivative of the acid accounts for 90 mol% or more, or preferably 95 mol% or more of all dicarboxylic acid components to be used in the production of the PET, and the phrase "mainly composed of ethylene glycol" refers to a state where ethylene glycol accounts for 90 mol% or more, or preferably 95 mol% or more of all diol components to be used in the production of the PET.

Here, a dicarboxylic acid component except terephthalic acid described above is similar to that used in the above production method of the first invention.

In addition, a diol component except ethylene glycol described above is similar to that used in the above production method of the first invention.

A catalyst to be used in the above esterification or ester exchange reaction, and a catalyst to be used in the polycondensation reaction are not particularly limited, and a catalyst appropriately selected from known catalysts can be used in any such reaction. Specific examples of the catalyst to be used in the polycondensation reaction include those exemplified in the above production method of the first invention. The above catalyst is typically used in an amount of 1 to 400 massppm with respect to a PET prepolymer to be obtained. It should be noted that a titanium compound acts as an esterification catalyst and/or an ester exchange catalyst. The titanium catalyst is preferably used in any such reaction in an amount in the range.

In addition, a phosphorus compound such as orthophosphoric acid, an alkyl orthophosphate, ethyl acid phosphate, triethylene glycol acid phosphate, phosphorous acid, or an alkyl phosphite can be used as a stabilizer. The stabilizer is used in an amount of preferably 1 to 1,000 massppm, or particularly preferably 2 to 200 massppm with respect to the PET prepolymer to be obtained.

Further, a compound of an alkali metal or of an alkaline earth metal, such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst. The compound is typically used in an amount of 1 to 100 massppm with respect to the PET prepolymer to be obtained.

Specific conditions for the production of the PET prepolymer to be used in the production method of the third invention are as described below. For example, the prepolymer can be produced by a method involving: preparing a dicarboxylic acid mainly composed of terephthalic acid and/or an ester formable derivative of the terephthalic acid, and a diol mainly composed of ethylene glycol at a molar ratio "dicarboxylic acid component: glycol component" of typically 1 : 1 to 1 : 2; subjecting the components to an esterification reaction in an esterification reaction tank in the presence of an esterification catalyst as required at a temperature of typically about 240 to 280°C under a pressure of typically normal pressure to about 0.4 MPa for about 1 to 10 hours or to an ester exchange reaction in the presence of an ester exchange catalyst; transferring the resultant product (PET low-molecular-weight body) to a polycondensation reaction tank; and subjecting the product to melt polycondensation. The melt polycondensation is performed using a polycondensation catalyst at a temperature of typically about 250 to 290°C under a pressure gradually reduced from normal pressure to be finally about 10 to 0.1 kPa in ordinary case and under stirring for such a time period that the product has an intrinsic viscosity of 0.18 dL/g to 0.4 dL/g.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol.

In addition, the above reaction can be performed by one or more of a continuous method, a batch method, and a semi-batch method. In addition, each of the esterification reaction tank (or an ester exchange reaction tank) and the melt polycondensation reaction tank may be composed of one stage or multiple stages.

The PET prepolymer obtained by the melt polycondensation reaction is supplied to a die head connected to the melt polycondensation reaction tank through a pipe and/or a gear pump and/or a filter, and is ejected from multiple die holes provided for the tip of a die in a strand shape or a drop shape. The PET ejected in a strand shape is cut with, for example, a strand cutter to be granulated into a pellet shape.

The PET prepolymer particles obtained by the melt polycondensation reaction to be used in the production method of the third invention have an average particle diameter of typically 0.5 to 3.0 mm. A lower limit for the average particle diameter is more preferably 0.6 mm, or particularly preferably 0.65 mm. Meanwhile, an upper limit for the average particle diameter is more preferably 2.0 mm, still more preferably 1.8 mm, or particularly preferably 1.6 mm. When the average particle diameter is less than 0.5 mm, the amount of a fine powder increases upon granulation of the prepolymer, so a trouble is apt to occur in any subsequent step during the transfer of the particles. When the average particle diameter exceeds 3.0 mm, a solid-phase polycondensation reaction time needed for the prepolymer to reach a desired molecular weight tends to be long irrespective of the presence or absence of an effect of the third invention.

Here, the average particle diameter of the particles is determined as follows: a cumulative distribution curve is created by a dry sieving test method described in JIS K0069, and the value at which a cumulative percentage reaches 50% is defined as the average particle diameter.

The PET prepolymer to be used in the production method of the third invention has an intrinsic viscosity of 0.18 to 0.40 dL/g. A lower limit for the intrinsic viscosity is preferably 0.20 dL/g. An upper limit for the intrinsic viscosity is preferably 0.38 dL/g, or particularly preferably 0. 35 dL/g. An intrinsic viscosity of the prepolymer of less than the lower limit is not preferable because a fine powder is apt to be produced upon granulation of the prepolymer, and a solid-phase polycondensation reaction time needed for the prepolymer to reach a desired high molecular weight becomes extremely long even in the case where the effect of the third invention is taken into consideration. On the other hand, when the intrinsic viscosity exceeds the upper limit, even a prepolymer having a relatively high intrinsic viscosity cannot exert an effect of shortening a reaction time needed for the acquisition of a high-molecular-weight PET, and an expensive facility is needed for stirring a highly viscous liquid and for subjecting the liquid to a high-vacuum reaction in a melt polycondensation step, with the result that the effect of the third invention in the entire production process is reduced.

The PET prepolymer to be used in the production method of the third invention has a terminal carboxyl group concentration of preferably 100 equivalents/ton or less, more preferably 70 equivalents/ton or less, still more preferably 40 equivalents/ton or less, or particularly preferably 20 equivalents/ton or less. When the terminal carboxyl group concentration exceeds 100 equivalents/ton, a polycondensation reaction rate tends to be small in a solid-phase polycondensation step as a subsequent step.

The PET prepolymer particles obtained as described above are treated in a solid state with heat, and are subjected to solid-phase polycondensation so as to have a predetermined intrinsic viscosity by the production method of the third invention. The heat treatment of the third invention mainly includes multistage solid-phase polycondensation steps and a temperature increase step. Those steps, which can be performed by a batch method, are preferably performed in a continuous manner in terms of production efficiency. The PET to be obtained by the production method of the third invention has an intrinsic viscosity of 0.70 dL/g or more. The production of a PET having an intrinsic viscosity of less than 0.70 dL/g is not preferable because the effect of the third invention, that is, a larger solid-phase polycondensation reaction rate than that in the case of a conventional method cannot be sufficiently exerted.

The heat treatment of the third invention includes at least two stages, that is, a first-stage solid-phase polycondensation step and a second-stage solid-phase polycondensation step below in the stated order:

(1) first-stage solid-phase polycondensation step;
a step of treating the PET prepolymer with heat at a temperature (T1b) of 200°C or higher and 225°C or lower under an inert gas atmosphere or reduced pressure for an average residence time of 0 . S hour or more and 10 hours or less so that a value for an increase in intrinsic viscosity of the prepolymer is 0.03 dL/g or more; and
(2) second-stage solid-phase polycondensation step;
a step of treating the prepolymer after the first-stage solid-phase polycondensation step with heat at a temperature (T2b) of 215°C or higher and 240°C or lower under an inert gas atmosphere or reduced pressure for an average residence time of 2 hours or more,
provided that the above temperatures T1b (°C) and T2b (°C) satisfy the following (Eq. 1b):

$$T1b+15 \leq T2b \quad (Eq. \ 1b).$$

Those first- and second-stage solid-phase polycondensation steps are each performed under an inert gas atmosphere or reduced pressure. The term "inert gas" as used herein refers to a gas which: has an oxygen concentration of 0.1 vol% or less, or preferably 0.05 vol% or less; and is substantially non-reactive with a polyester (PET). Specific examples of the gas which is substantially non-reactive with a polyester include nitrogen, helium, neon, argon, xenon, and carbon dioxide; nitrogen is preferably used mainly in terms of cost efficiency. In addition, the term "reduced pressure" refers to a state where an absolute pressure is 2 kPa or less.

The temperature (T1b) of the first-stage solid-phase polycondensation step is 200°C or higher and 225°C or lower. A lower limit for T1b is preferably 205°C. An upper limit for T1b is preferably 222°C, or more preferably 220°C. In the case where T1b is lower than 200°C, a polycondensation reaction rate in the first-stage step becomes small, and a load in the subsequent second-stage step becomes large. The case where T1b exceeds 225°C is inconvenient because the temperature (T2b) of the second-stage solid-phase polycondensation step exceeds its upper limit, that is, 240°C, and, for example, the fusion of the PET particles is apt to occur.
In addition, T1b and T2b must satisfy T1b + 15°C ≤ T2b (Eq. 1b). When T2b is lower than T1b + 15°C, an effect of improving a solid-phase polycondensation reaction rate of the third invention cannot be obtained in some cases.

The average residence time of the first-stage solid-phase polycondensation step is typically 0.5 hour or more and 10 hours or less, though these values vary depending on the temperature of the step. A lower limit for the average residence time is preferably 1. 0 hour. An upper limit for the average residence time is preferably 9 hours, or more preferably 8 hours. In the case where the average residence time is less than 0.5 hour, a value for an increase in intrinsic viscosity in the first-stage step becomes small, and a load in the second-stage step becomes large. The case where the average residence time exceeds 5 hours is not efficient because a solid-phase polycondensation reaction rate reduces in the latter half of the first-stage step.

An increase in intrinsic viscosity in the first-stage solid-phase polycondensation step is 0.03 dL/g or more, or preferably 0.05 dL/g or more. When the increase is less than 0.03 dL/g, an effect of increasing a solid-phase polycondensation reaction rate in the second-stage step cannot be sufficiently obtained. An upper limit for the increase in intrinsic viscosity in the first-stage step has only to be set in order that a time period for the entirety of the heat treatment may be shortest and/or a quantity of heat to be inputted may be minimum, and is typically about 0.30 dL/g.

The temperature (T2b) of the second-stage solid-phase polycondensation step is 215°C or higher and 240°C or lower. A lower limit for T2b is preferably 220°C. An upper limit for T2b is preferably 237°C, or more preferably 235°C. The case where T2b is lower than 215°C is not preferable because it takes a long time for the prepolymer to achieve a target degree of polymerization. The case where T2b exceeds 240°C is inconvenient because, for example, the fusion of the PET particles is apt to occur.

The average residence time of the second-stage solid-phase polycondensation step is 2 hours or more, or preferably 4 hours or more, and is typically 36 hours or less. When the average residence time is less than 2 hours, a value for an increase in intrinsic viscosity in the second-stage step becomes small, and a load in the first-stage step for the acquisition of a PET having a desired degree of polymerization becomes large.

The above first-stage solid-phase polycondensation step and second-stage solid-phase polycondensation step of the production method of the third invention are preferably performed in a continuous manner, and a continuous moving bed is particularly preferably used.

In the production method of the third invention, a temperature increase step is preferably provided between the first-stage solid-phase polycondensation step and the second-stage solid-phase polycondensation step in order that the PET particles may be prevented from fusing with each other upon transfer from the first-stage step to the second-stage step. A temperature (Thb) condition in the temperature increase step is preferably T1b or higher and 250°C or lower, or more preferably T2b or higher and 250°C or lower. Setting Thb in the range can reduce the frequency at which the polymer particles fuse with each other in the second-stage solid-phase polycondensation step. A temperature is changed gradually between the first- and second-stage steps; when the PET particles after the heat treatment in the first stage are treated during the change particularly at such a temperature that Thb is T2b or higher within a short time period, a slight increase in intrinsic viscosity, or a certain change in crystal structure, of the PET occurs more significantly than that in the case where the particles are treated while the temperature is gradually increased. The occurrence may have a good effect on an additional increase in solid-phase polycondensation reaction rate in the second-stage step, and may be effective in preventing the fusion in the second-stage solid-phase polycondensation step.

A residence time in the temperature increase step is typically 30 minutes or less, preferably 25 minutes or less, or more preferably 20 minutes or less. A residence time of the temperature increase step in the range is preferable because the size of a facility to be used in the temperature increase step can be reduced. The facility to be used in the temperature increase step is not particularly limited as long as the facility can heat, and increase the temperature of the PET particles; a fluidized bed using an inert gas is preferable because, for example, the fusion of the particles occurs at a low frequency.

A crystallization step of crystallizing at least part of the PET prepolymer substantially in an amorphous state is preferably provided prior to the first-stage solid-phase polycondensation step of the heat treatment of the third invention. The crystallization of at least part of the PET prepolymer can alleviate the fusion of the PET particles in a subsequent step such as the first- or second-stage solid-phase polycondensation step. The crystallization is performed by treating the PET prepolymer with heat; a temperature (Tc) of the crystallization step is preferably 140°C or higher and 200°C or lower. When the temperature is lower than 140°C, it requires a long time to crystallize the prepolymer particles to such an extent that the particles do not fuse with each other, so the effect of the third invention is reduced. When the temperature exceeds 200°C, the fusion of the prepolymer particles tends to occur. A residence time is typically 90 minutes or less, or preferably 60 minutes or less.

In the crystallization step, the crystallization of the PET prepolymer progresses, and a crystallinity to be achieved is typically about 30 to 60 mass%. A facility to be used in the crystallization step is not particularly limited as long as the facility can heat the PET particles; the step is preferably performed in a fluidized bed using an inert gas because, for example, the fusion of the particles occurs at a low frequency. A step of increasing the temperature of the PET prepolymer to Tcb can be provided before the crystallization step, or an increase in temperature, and the crystallization, of the PET prepolymer may be performed in the crystallization step. In addition, the prepolymer may be dried in the crystallization step. Alternatively, the prepolymer may be dried in an initial stage of the first-stage solid-phase polycondensation step.

The PET to be obtained by the production method of the third invention can be suitably used as a raw material to be molded into, for example, a fiber, a film, or a bottle. In particular, the PET can be turned into a bottle to be used for, for example, packaging a beverage by: molding the PET into a preform by injection molding or extrusion molding; and subjecting the preform to stretch blow molding. In addition, the PET can be turned into a bottle by direct blow molding. In addition, the PET can be turned into a film or a sheet by extrusion molding or stretch molding to be used in various applications including packaging materials. In addition, the PET can be turned into a fiber by extrusion/stretch molding.

An embodiment of the method of producing a PET of the fourth invention (which may hereinafter be referred to as "production method of the fourth invention") will be described in detail.

The heat treatment of the fourth invention means a step including a drying step, a temperature increase step, a crystallization step, and a solid-phase polycondensation step and intended for the treatment of a PET prepolymer in a solid state under a temperature condition exceeding normal temperature.

In addition, in the fourth invention, an intrinsic viscosity is used as an indicator for the molecular weight of a PET.

A method of obtaining a PET prepolymer to be used in the production method of the fourth invention is not particularly limited, and, for example, the prepolymer can be produced by a conventional production method for a PET. To be specific, the prepolymer is typically produced by: subjecting dicarboxylic acid components mainly composed of terephthalic acid and/or an ester formable derivative of the terephthalic acid, and diol components mainly composed of ethylene glycol to an esterification reaction and/or an ester exchange reaction in the presence of an esterification or ester exchange catalyst as required; and subjecting the resultant to melt polycondensation using a polycondensation catalyst. Details about the foregoing are as described below. For example, a PET prepolymer is obtained by: loading a dicarboxylic acid component and a diol component as raw materials into a slurry preparation tank; stirring and mixing the components to prepare raw material slurry; subjecting the slurry to an esterification reaction in an esterification reaction tank under normal pressure to increased pressure and heat while removing, for example, water produced by the reaction by distillation; transferring the resultant PET low-molecular-weight body (oligomer) as an esterification reaction product to a polycondensation tank; and subjecting the oligomer to melt polycondensation using a polycondensation catalyst under reduced pressure and heat.

In the production method of the fourth invention, the phrase "mainly composed of terephthalic acid" refers to a state where terephthalic acid and/or an ester formable derivative of the acid accounts for 90 mol% or more, or preferably 95 mol% or more of all dicarboxylic acid components to be used in the production of the PET, and the phrase "mainly composed of ethylene glycol" refers to a state where ethylene glycol accounts for 90 mol% or more, or preferably 95 mol% or more of all diol components to be used in the production of the PET.

Here, a dicarboxylic acid component except terephthalic acid described above is similar to that used in the above production method of the first invention.

In addition, a diol component except ethylene glycol described above is similar to that used in the above production method of the first invention.

A catalyst to be used in the above esterification or ester exchange reaction, and a catalyst to be used in the polycondensation reaction are not particularly limited, and a catalyst appropriately selected from known catalysts can be used in any such reaction. Specific examples of the catalyst to be used in the polycondensation reaction include those exemplified in the above production method of the first invention. The above catalyst is typically used in an amount of 1 to 400 massppm with respect to a PET prepolymer to be obtained. It should be noted that a titanium compound acts as an esterification catalyst and/or an ester exchange catalyst. The titanium catalyst is preferably used in any such reaction in an amount in the range.

In addition, a phosphorus compound such as orthophosphoric acid, an alkyl orthophosphate, ethyl acid phosphate, triethylene glycol acid phosphate, phosphorous acid, or an alkyl phosphite can be used as a stabilizer. The stabilizer is used in an amount of preferably 1 to 1,000 massppm, or particularly preferably 2 to 200 massppm with respect to the PET prepolymer to be obtained.

Further, a compound of an alkali metal or of an alkaline earth metal such as lithium acetate, sodium acetate, potassium acetate, magnesium acetate, magnesium hydroxide, a magnesium alkoxide, magnesium carbonate, potassium hydroxide, calcium hydroxide, calcium acetate, or calcium carbonate can also be used together with the polycondensation catalyst. The compound is typically used in an amount of 1 to 100 massppm with respect to the PET prepolymer to be obtained.

Specific conditions for the production of the PET prepolymer to be used in the production method of the fourth invention are as described below.

The prepolymer can be produced by a method involving: preparing a dicarboxylic acid mainly composed of terephthalic acid and/or an ester formable derivative of the terephthalic acid, and a diol mainly composed of ethylene glycol at a molar ratio "dicarboxylic acid component : glycol component" of typically 1 : 1 to 1 : 2; subjecting the components to an esterification reaction in an esterification reaction tank in the presence of an esterification catalyst as required at a temperature of typically about 240 to 280°C under a pressure of typically normal pressure to 0.4 MPa in a relative pressure against atomospheric pressure for about 1 to 10 hours or to an ester exchange reaction in the presence of an ester exchange catalyst; transferring the resultant product (PET low-molecular-weight body) to a polycondensation reaction tank; and subjecting the product to melt polycondensation. The melt polycondensation is performed using a polycondensation catalyst at a temperature of typically about 250 to 290°C under a pressure gradually reduced from normal pressure to be finally about 10 to 0.1 kPa in an absolute pressure in ordinary case and under stirring for such a time period that the product has an intrinsic viscosity of 0.18 dL/g to 0.40 dL/g as described below.

It should be noted that, when the dicarboxylic acid component is an ester formable derivative of a dicarboxylic acid having an appropriate melting point, such as dimethyl terephthalate, the component can be melted instead of being turned into slurry with the diol before the component is subjected to an ester exchange reaction with the diol. In addition, the above reaction can be performed by one or more of a continuous method, a batch method, and a semi-batch method. In addition, each of the esterification reaction tank (or an ester exchange reaction tank) and the melt polycondensation reaction tank may be composed of one stage or multiple stages.

The PET prepolymer obtained by the melt polycondensation reaction is supplied to a die head connected to the melt polycondensation reaction tank through a pipe and/or a gear pump and/or a filter, and is ejected from multiple die holes provided for the tip of a die in a strand shape or a drop shape. The PET prepolymer ejected in a strand shape is cut with, for example, a strand cutter to be granulated into a pellet shape.

The PET prepolymer particles obtained by the melt polycondensation reaction to be used in the production method of the fourth invention have an average mass of preferably 0.1 to 30 mg/particle. A lower limit for the average mass is more preferably 0.5 mg/particle, or particularly preferably 0.8 mg/particle. Meanwhile, an upper limit for the average mass is more preferably 10 mg/particle, still more preferably 5mg/particle, or particularly preferably 3 mg/particle. An average mass of the PET prepolymer particles to be used in the production method of the fourth invention equal to or larger than the above lower limit is more preferable because a trouble hardly occurs in any subsequent step or upon air transfer of the particles. In addition, an average mass of the particles equal to or smaller than the above upper limit is more preferable because a solid-phase polycondensation reaction time needed for the prepolymer to reach a desired molecular weight can be shortened. It should be noted that the term "average mass of a PET prepolymer" as used in the description refers to a value calculated by: measuring the total mass of 30 PET prepolymer particles with a precision balance to first decimal places (0. 1 mg) ; and dividing the measured value by 30.

The PET prepolymer to be used in the production method of the fourth invention has an intrinsic viscosity of 0.18 to 0.40 dL/g. A lower limit for the intrinsic viscosity is preferably 0.20 dL/g. An upper limit for the intrinsic viscosity is preferably 0.38 dL/g, or particularly preferably 0.35 dL/g. An intrinsic viscosity of the prepolymer of less than the lower limit is not preferable because a fine powder is apt to be produced upon granulation of the prepolymer, and a solid-phase polycondensation reaction time needed for the prepolymer to reach a desired high molecular weight becomes extremely long. On the other hand, when the intrinsic viscosity exceeds the upper limit, even a prepolymer having a relatively high intrinsic viscosity cannot exert an effect of shortening a reaction time needed for the acquisition of a high-molecular-weight PET, which is a feature of the production method of the fourth invention, and a facility is needed for stirring a highly viscous liquid and for subjecting the liquid to a high-vacuum reaction in a melt polycondensation step, with the result that the effect of the fourth invention in the entire production process is reduced.

The PET prepolymer of the fourth invention has a terminal carboxyl group concentration of preferably 100 equivalents/ton or less, the carboxyl group concentration is more preferably 70 equivalents/ton or less, still more preferably 40 equivalents/ton or less, or particularly preferably 20 equivalents/ton or less. When the terminal carboxyl group concentration in the PET prepolymer exceeds 100equivalents/ton, a polycondensation reaction rate tends to be small in a solid-phase polycondensation step as a subsequent step.

The PET prepolymer particles obtained as described above are treated in a solid state with heat, and are subjected to solid-phase polycondensation so as to have a predetermined intrinsic viscosity by the production method of the fourth invention. The heat treatment of the fourth invention mainly includes multistage solid-phase polycondensation steps and a temperature increase step. Those steps, which can be performed by a batch method, are preferably performed in a continuous manner in terms of production efficiency. The PET to be obtained by the production method of the fourth invention has an intrinsic viscosity of 0.70 dL/g or more. The production of a PET having an intrinsic viscosity of less than 0.70 dL/g is not preferable because the effect of the fourth invention, that is, a larger solid-phase polycondensation reaction rate than that in the case of a conventional method cannot be sufficiently exerted.

The heat treatment of the production method of the fourth invention includes at least a first-stage solid-phase polycondensation step, a temperature increase step, and a second-stage solid-phase polycondensation step described below in the stated order:

(1) the first-stage solid-phase polycondensation step;
the step is a step of treating the PET prepolymer with heat under an inert gas atmosphere or reduced pressure, and a temperature (T1c) of the heat treatment is 190°C or higher and 225°C or lower;
(2) the temperature increase step;
the step is a step of increasing the temperature of the PET prepolymer after the first-stage solid-phase polycondensation step under an inert gas atmosphere or reduced pressure from a temperature equal to or lower than the temperature (T1c) of the heat treatment of the first-stage solid-phase polycondensation step to a temperature (T2c), the temperature of the PET prepolymer is increased from the temperature T1c (°C) to (T1c + 15)°C within 30 minutes, and the temperatures T1c (°C) and T2c (°C) satisfy the following (Eq. 1c) and (Eq. 2c):

$$T1c+15 \leq T2c \quad (Eq.\ 1c),$$

and

$$205°C \leq T2c \leq 240°C \quad (Eq. \; 2c);$$

and
(3) the second-stage solid-phase polycondensation step;
the step is a step of treating the PET prepolymer after the first-stage solid-phase polycondensation step and the temperature increase step with heat under an inert gas atmosphere or reduced pressure, and a temperature ($T3c$) of the heat treatment is 190°C or higher and 240°C or lower.

Those temperature increase step, and first- and second-stage solid-phase polycondensation steps are each performed under an inert gas atmosphere or reduced pressure. The term "inert gas" as used herein refers to a gas which: has an oxygen concentration of 0.1 vol% or less, or preferably 0.05 vol% or less; and is substantially non-reactive with a polyester (PET). Specific examples of the gas which is substantially non-reactive with a polyester include nitrogen, helium, neon, argon, xenon, and carbon dioxide; nitrogen is preferably used mainly in terms of cost efficiency. In addition, the term "reduced pressure" refers to a state where an absolute pressure is 2 kPa or less.

The temperature ($T1c$) of the first-stage solid-phase polycondensation step is 190°C or higher and 225°C or lower. A lower limit for $T1c$ is preferably 200°C, and more preferably 205°C. An upper limit for $T1c$ is preferably 220°C. The case where $T1c$ is lower than 190°C is not preferable because a polycondensation reaction rate in the first-stage step becomes small, and a load in the subsequent second-stage step becomes large. The case where $T1c$ exceeds 225°C is inconvenient because the temperature ($T2c$) of the temperature increase step exceeds its upper limit, that is, 240°C as described below, and, for example, the fusion of the PET particles is apt to occur.

In addition, in the temperature increase step after the first-stage solid-phase polycondensation of the production method of the fourth invention, $T1c$ and $T2c$ must satisfy $T1c + 15°C \leq T2c$ (Eq. 1c), and the temperature of the PET prepolymer must be increased from $T1c$ by at least 15°C within at most 30 minutes. That is, $T1c$ is 190°C or higher and 225°C or lower, and $T1c$ and $T2c$ satisfy (Eq. 1c), whereby $T2c$ satisfies the following (Eq. 2c):

$$205°C \leq T2c \leq 240°C \quad (Eq. \; 2c).$$

With such constitution, an effect of the fourth invention, that is, a large solid-phase polycondensation rate after the temperature increase step can be obtained.

The reason why the effect of the fourth invention can be obtained by such temperature increase step is unclear, but the reason is assumed to be as described below.
That is, when the prepolymer is crystallized at a low molecular weight, a crystal structure is formed, whereby the mobility of a polyester molecular chain reduces, and part of terminal groups are inactivated. In particular, when the prepolymer is crystallized at a low molecular weight, the absolute value for the number of terminal groups to be inactivated increases, so a polycondensation reaction rate reduces in the latter half of the solid-phase polycondensation. In contrast, when the prepolymer is treated with heat during the crystallization so that its temperature is increased by 15 °C or higher within a short time period, the prepolymer maintains a solid state, but the melting and recrystallization of the crystal occur, and an amorphous region where a large number of terminal groups are present is formed again, whereby part of inactivated terminal groups recover their activity, and the polycondensation reaction rate increases.
When the temperature of the prepolymer is increased by lower than 15°C or the time period needed for the temperature increase exceeds 30 minutes, an effect of improving the solid-phase polycondensation reaction rate of the production method of the fourth invention, in particular, an effect in the second-stage solid-phase polycondensation step cannot be obtained in some cases.

The temperature ($T3c$) of the second-stage solid-phase polycondensation step is 190°C or higher and 240°C or lower. A lower limit for $T3c$ is preferably 210°C, or more preferably 220°C. An upper limit for $T3c$ is preferably 237°C, or more preferably 235°C. In the case where $T3c$ is lower than 190°C, it takes a long time for the prepolymer to achieve a target degree of polymerization. In addition, the case where $T3c$ exceeds 240°C is inconvenient because, for example, the fusion of the PET particles is apt to occur. It should be noted that the effect of the fourth invention, that is, a large solid-phase polycondensation rate is exerted even when $T3c$ is lower than the temperature ($T2c$) of the temperature increase step.

The average residence time of the first-stage solid-phase polycondensation step is typically 0.5 hour or more and 10 hours or less, though these values vary depending on the temperature of $T1c$. A lower limit for the average residence time is preferably 1.0 hour. An upper limit for the average residence time is preferably 9 hours, or more preferably 8 hours. In the case where the average residence time of the first-stage solid-phase polycondensation step is 0.5 hour or more, a value for an increase in intrinsic viscosity in the first-stage solid-phase polycondensation step increases, and a load in the second-stage solid-phase polycondensation step is alleviated. In addition, in the case where the average residence time of the first-stage solid-phase polycondensation step is 10 hours or less, a reduction in solid-phase polycondensation reaction rate in the latter half of the first-stage solid-phase polycondensation step is small. Each of the cases is efficient and more preferable.

An increase in intrinsic viscosity in the first-stage solid-phase polycondensation step, that is, a difference in intrinsic viscosity between the PET before the first-stage solid-phase polycondensation step and the PET after the first-stage solid-phase polycondensation step is typically 0.03 dL/g or more, or preferably 0. 05 dL/g or more. A value for the difference of 0.03 dL/g or more is more preferable because an effect of increasing the solid-phase polycondensation reaction rate in the second-stage solid-phase polycondensation step can be easily obtained. In addition, an upper limit for the increase in intrinsic viscosity in the first-stage solid-phase polycondensation step has only to be set in order that a time period for the entirety of the heat treatment may be shortest and/or a quantity of heat to be inputted may be minimum, and is typically about 0.30 dL/g.

A residence time in the temperature increase step is typically 60 minutes or less, preferably 40 minutes or less, or more preferably 30 minutes or less. A residence time of the temperature increase step in the range is more preferable because an effect of reducing the size of a facility to be used in the temperature increase step as well as the above effect of the temperature increase step, that is, a large solid-phase polycondensation rate is large. The facility to be used in the temperature increase step is not particularly limited as long as the facility can heat, and increase the temperature of the PET particles; a fluidized bed using an inert gas is preferably used in ordinary cases because the fusion of the particles, the crushing of each of the particles, or the like occurs at a low frequency.

The prepolymer to be subjected to the second-stage solid-phase polycondensation step after the temperature increase step has an intrinsic viscosity of preferably 0.35 dL/g or more, more preferably 0.40 dL/g or more, still more preferably 0.43 dL/g or more, or particularly preferably 0.45 dL/g or more. An intrinsic viscosity of the prepolymer after the temperature increase step in the range is more preferable because a solid-phase polycondensation reaction rate in the second-stage solid-phase polycondensation step of the production method of the fourth invention increases, and, in particular, there is a tendency that the thermal fusion of a PET having a copolymerizable component under a load can be suppressed. A difference in intrinsic viscosity between the prepolymer to be subjected to the second-stage solid-phase polycondensation step after the temperature increase step and a polyester to be obtained after the second-stage solid-phase polycondensation step is typically 0.10 dL/g or more, or preferably 0.20 dL/g or more.

The average residence time of the second-stage solid-phase polycondensation step is typically 2 hours or more and 50 hours or less, though these values vary depending on the temperature of the step. A lower limit for the average residence time is preferably 4 hours or more. An average residence time in the range is more preferable because a value for an increase in intrinsic viscosity in the second-stage solid-phase polycondensation step increases, and a PET having a desired degree of polymerization can be efficiently obtained.

The above first-stage solid-phase polycondensation step and second-stage solid-phase polycondensation step of the fourth invention are preferably performed in a continuous manner, and a continuous moving bed is particularly preferably used in terms of, for example, production efficiency, reaction controllability, and operability.

A crystallization step of crystallizing at least part of the PET prepolymer substantially in an amorphous state is preferably provided prior to the first-stage solid-phase polycondensation step of the heat treatment of the fourth invention. The crystallization of at least part of the PET prepolymer can alleviate the fusion of the PET particles in a subsequent step such as the first- or second-stage solid-phase polycondensation step. The crystallization is performed by treating the PET prepolymer with heat; a temperature (Tx) of the crystallization step is normally 110°C or higher and 200°C or lower, preferably 140°C or higher for a lower limit, and more preferably 160°C or higher for a lower limit. A temperature (Tx) of the crystallization step in the range is more preferable because the prepolymer particles hardly fuse with each other, and the prepolymer reaches a sufficient crystallinity within a relatively short time period. In addition, such temperature is more preferable because there is a tendency that the particles hardly fuse with each other in any subsequent step.

In the crystallization step, a PET prepolymer having a crystallinity of about 30 to 60 mass% is preferably obtained by progressing the crystallization of the PET prepolymer. A facility to be used in the crystallization step is not particularly limited as long as the facility can heat the PET particles; the step is preferably performed in a fluidized bed using an inert gas because, for example, the fusion of the particles occurs at a low frequency.

Further, a step of increasing the temperature of the PET prepolymer to Tx can be provided before the crystallization step, or an increase in temperature, and the crystallization, of the PET prepolymer may be performed in the crystallization step. In addition, the prepolymer may be dried in the crystallization step. Alternatively, the prepolymer may be dried in an initial stage of the first-stage solid-phase polycondensation step.

A second-stage temperature increase step and a third-stage solid-phase polycondensation step may be further provided after the second-stage solid-phase polycondensation step of the heat treatment of the fourth invention. In this case, the temperature (T3c) of the second-stage solid-phase polycondensation step is preferably 190°C or higher and 225°C or lower, a temperature (T4c) of the second-stage temperature increase step is preferably higher than T3c (°C) by 15°C or higher, and is preferably 240°C or lower, and a temperature (T5c) of the third-stage solid-phase polycondensation step is preferably 205°C or higher and 240°C or lower. Here, the second-stage temperature increase step is a step of increasing the temperature of the PET prepolymer from a temperature equal to or lower than T3c (°C) to the temperature (T4c), and the temperature of the PET prepolymer is preferably increased from the temperature T2c (°C) to (T2c+15) °C within 30 minutes. Similarly, a solid-phase polycondensation step and a temperature increase step may be alternately repeated three times or more.

As described above, a method involving alternately repeating a solid-phase polycondensation step at a relatively low temperature and a temperature increase step of increasing the temperature of a PET prepolymer to a relatively high temperature within a short time period is more preferable because of the following reason: in particular, upon solid-phase polycondensation of a PET prepolymer the particles thereof are apt to fuse with each other owing to a large copolymerization amount, there are tendencies that the fusion when a solid-phase polycondensation step is performed in a moving bed can be suppressed and that the inactivation of part of terminal groups occurring in association with the performance of solid-phase polycondensation for a long time period can be suppressed, whereby an entire heat treatment time tends to be short.

Hereinafter, the present invention will be described in more detail by way of examples. However, the present invention is not limited to the following examples without departing from the gist of the present invention.
Methods of measuring various physical properties in examples and comparative examples are as described below.

<Intrinsic viscosity (IV)>

About 0.25 g of a sample was dissolved in about 25 mL of a mixed solvent containing phenol and 1,1,2,2-tetrachloroethane at a mass ratio of 1:1 so that the resultant solution might have a concentration of $1.00 \times 10^{-2}$ kg/L; an amorphous polyester or PET was dissolved at 110°C within 30 minutes, and a polyester or PET after solid-phase polycondensation was dissolved at 140°C within 30minutes. After that, the solution was cooled to 30°C. The falling seconds of the sample solution having a concentration of $1.00 \times 10^{-2}$ kg/L and only the solvent were measured with a fully automatic solution viscometer ("2CH type DJ504" manufactured by SENTEC Corp,. ltd.), and the intrinsic viscosity was calculated from the following equation. It should be noted that the above fully automatic solution viscometer performs the measurement on the basis of the following principle: a falling time required for a solution having a unit volume to fall in a capillary and a falling time in the case of a solvent alone are compared with each other.

$$IV = [(1 + 4K_H \cdot \eta_{sp})^{0.5} - 1] / (200 K_H \cdot C)$$

where $\eta_{sp} = \eta/\eta_0 - 1$, $\eta$ represents the falling seconds of the sample solution, $\eta_0$ represents the falling seconds of the solvent, C represents the concentration of a polymer solution (kg/L), and $K_H$ represents Huggins' constant; an adopted value for $K_H$ was 0.33.

<Average mass of polyester and PET prepolymer particles>

An average mass per one particle of 30 PET prepolymer particles was calculated by: measuring the total mass of the particles with a precision balance to first decimal places (0.1 mg) ; and dividing the measured value by 30.

<Average particle diameter of polyester and PET prepolymer particles>

A cumulative distribution curve is created by a dry sieving test method described in JIS K0069, and the value at which a cumulative percentage reaches 50% is defined as an average particle diameter.

<Terminal carboxyl group concentration (AV)>

After having been pulverized, a sample was dried with a hot air dryer at 140°C for 15 minutes, and was cooled in a desiccator to room temperature. 0.1 g of the sample was precisely, weighed and collected in a test tube. 3 mL of benzyl alcohol were added to dissolve the sample at 195°C within 3 minutes while a dry nitrogen gas was blown. Next, 5 mL of chloroform were gradually added to the solution, and the mixture was cooled to room temperature. One or two drops of a phenol red indicator were added to the solution, and the solution was titrated with a 0.1N solution of sodium hydroxide in benzyl alcohol under stirring while a dry nitrogen gas was blown. The amount in which the color of the indicator changed from a yellow to a red was defined as the endpoint of the titration. In addition, a similar operation was performed as a blank without the use of a polyester resin sample. A terminal carboxyl group concentration was calculated from the following equation by using those results:

$$AV \ (equivalents/ton) = (A-B) \ x \ 0.1 \ x \ f/W$$

where A represents the amount ($\mu$L) of the 0.1N solution of sodium hydroxide in benzyl alcohol needed for titration when the sample was used, B represents the amount ($\mu$L) of the 0.1N solution of sodium hydroxide in benzyl alcohol needed for titration in the blank, W represents the amount (g) of the polyester resin sample, and f represents the factor of the 0.1N solution of sodium hydroxide in benzyl alcohol.

It should be noted that the factor (f) of the 0.1N solution of sodium hydroxide in benzyl alcohol was calculated from the following equation by: collecting 5 mL of methanol in a test tube; adding one or two drops of a solution of phenol red in ethanol as an indicator; titrating methanol with 0.4 mL of a 0.1N solution of sodium hydroxide in benzyl alcohol up to a point of color change; collecting and adding 0.2 mL of 0.1N hydrochloric acid with a known factor as a standard solution; and titrating the resultant with a 0.1N solution of sodium hydroxide in benzyl alcohol up to a point of color change again (the above operations were performed while a dry nitrogen gas was blown).

Factor (f) = factor of 0.1N hydrochloric acid x collective amount ($\mu$L) of 0.1N hydrochloric acid/titer ($\mu$L) of 0. 1N solution of sodium hydroxide in benzyl alcohol

<Crystallinity ($X_c$)>

A crystallinity ($X_c$) was calculated from a density d (kg/m$^3$) of a sample by using the following equation while setting a perfect amorphous density $d_a$ to 1,335 kg/m$^3$ and a perfect crystal density $d_c$ to 1,455 kg/m$^3$:

$$X_c = (d-d_a) d_c / (d_c-d_a) d \ x \ 100 \ (\%).$$

In addition, the density d of the sample was measured with a dry automatic density measuring device (Accupyc 1330 manufactured by Shimadzu Corporation) at a measurement temperature of 23°C by precisely weighing 6 to 8 g of the sample in a measurement cell.

<Diethylene glycol (DEG) copolymerization mol%>

50 ml of a 4N solution of potassium hydroxide in methanol are added to 5.00 g of PET particles as a sample. A reflux condenser is set on a vessel containing the mixture, and the mixture is refluxed under heat for 2 hours while being stirred on a hot plate with a magnetic stirrer (having a surface temperature of 200°C) so that the particles are hydrolyzed. After the resultant has been left standing to cool, about 20 g of high-purity terephthalic acid are added to the resultant, and the mixture is sufficiently shaken so as to be neutralized to have a pH of 9 or less. The resultant slurry is filtrated through a glass filter (11G-4), and is then washed with 2 ml of methanol twice. The filtrate and the washed liquid are mixed, and the mixture is used as a sample liquid to be subjected to gas chromatography. 1 $\mu$l of the sample liquid is injected with a microsyringe into a gas chromatography (type GC-14APF) manufactured by Shimadzu Corporation, and the mol % of a diethylene glycol component with respect to all glycol components is calculated from the areas of the peaks of ethylene glycol (EG) and the diethylene glycol component in accordance with the following equation.

$$Copolymerization \ mol\% \ of \ DEG = (A_{DEG} \ x \ C_{fDEG}) / (\Sigma(A \ x \ C_f)) \ x \ 100$$

$A_{DEG}$: the area of the diethylene glycol component ($\mu$V·sec)
$C_{fDEG}$: the correction coefficient of the glycol component
A: the area of each glycol component ($\mu$V·sec)
$C_f$: the correction coefficient of each glycol component

(Example 1)

Polyester prepolymer particles were produced using a polyester prepolymer continuous production apparatus including: a slurry preparation tank having a stirring machine, an ethylene glycol loading pipe, and a terephthalic acid loading pipe; a pipe for transferring slurry to a perfect mixing type first esterification reaction tank; the perfect mixing type first and a second esterification reaction tanks each having a stirring machine, a separation column, a raw material receiving port, a catalyst loading pipe, and a reaction product transferring pipe; a pipe for transferring an esterification reaction product (oligomer) to a perfect mixing type melt polycondensation reaction tank (provided that the pipe was provided with a catalyst loading pipe); the melt polycondensation reaction tank having a stirring machine, a separation column, an oligomer receiving port, and a catalyst loading pipe; and a strand cutter for ejecting a polyester prepolymer in a strand shape from a die plate to a stream of water through an extracting pipe and a gear pump and cutting the prepolymer to provide particles (Pelletizer (P-USG 100) manufactured by Rieter Automatic GmbH). All reactions were each performed under a nitrogen atmosphere.

First, 450 parts by mass of bis- (β-hydroxyethyl) terephthalate were loaded into the first esterification reaction tank, and air in the tank was replaced with nitrogen. After that, bis-(β-hydroxyethyl)terephthalate was melted at a temperature of 262°C. In addition, terephthalic acid and ethylene glycol were loaded into the slurry preparation tank so that a molar ratio of ethylene glycol to terephthalic acid might be 1.5, and the mixture was stirred, whereby slurry was prepared. The slurry was continuously charged at a rate of 135 parts by mass/h into the first esterification reaction tank having a pressure of 96 kPaG and a temperature of 262°C so that an average residence time might be 4.5 hours (slurry transferring step). At the same time, a solution of ammonium metatungstate in ethylene glycol (concentration: 1.1 mass% in terms of a tungsten atom) was continuously added from the vapor phase portion of the first esterification reaction tank in an amount of 80 massppm in terms of tungsten with respect to a polyester prepolymer to be obtained. While produced water was removed by distillation from the separation column, an esterification reaction was performed (esterification step), and a liquid produced as a result of the reaction was continuously extracted and transferred to the second esterification reaction tank. An esterification reaction was performed in the second esterification reaction tank at a temperature of 260°C under a pressure of 5 kPaG for a residence time of 1.5 hours (esterification step).

The resultant oligomer was continuously transferred from the second esterification reaction tank to the melt polycondensation reaction tank through the transferring pipe. A solution of orthophosphoric acid in ethylene glycol (concentration: 1.6 mass% in terms of a phosphorus atom) was continuously added in an amount of 12 massppm in terms of phosphorus with respect to the polyester prepolymer to be obtained from a site on.an upstream side with respect to the site of the transferring pipe from which diantimony trioxide was added. Further, a solution of diantimony trioxide in ethylene glycol (concentration: 1.8 mass% in terms of an antimony atom concentration) was continuously added in an amount of 209 massppm in terms of antimony with respect to the polyester prepolymer to be obtained, and was supplied to the melt polycondensation reaction tank.

In the melt polycondensation reaction tank, a reaction was performed at a pressure of 2.5 kPaA and a temperature of 273°C for a residence time of 1.0 hour (melt polycondensation step), and the resultant polyester prepolymer was ejected in a strand shape from the die plate through the extracting pipe and the gear pump. The strand-shaped polyester prepolymer was cooled in a stream of water formed by the strand cutter (Pelletizer (P-USG 100) manufactured by Rieter Automatic GmbH) to solidify, and was cut with the rotary teeth and fixed teeth of the cutter, whereby particles were obtained. Particles after a lapse of 15 hours or more from the initiation of the melt polycondensation reaction were defined as samples to be subjected to solid-phase polycondensation.

The polyester prepolymer particles (samples) had an intrinsic viscosity (IV) of 0.211 dL/g, and had a terminal carboxyl group concentration (AV) of 16 equivalents/ton and an average particle diameter of 1.0 mm.

18 g of the prepolymer particles were mounted on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the particles were subjected to a crystallization treatment for 2 hours in a stream of nitrogen at a flow rate of 50 NL/min and a temperature of 180°C in the inert oven. Here, the symbol "NL" represents the volume (L) of a gas at 0°C and 101.3 kPa.

2 g of the crystallized polyester prepolymer particles after the crystallization treatment were uniformly mounted on the stainless vat. The vat was placed in the inert oven containing a gas having a temperature of 50°C, and the particles were subjected to solid-phase polycondensation (solid-phase polycondensation step) in a stream of nitrogen at a flow rate of 50 NL/min in the inert oven while the temperature of nitrogen was changed as follows: the temperature was increased from 50°C to 210°C over 30 minutes; retained at 210°C for 20 minutes; increased to 230°C at a rate of temperature increase of 0.5°C/min; and retained at 230°C for a predetermined time period.

A retention time after the temperature had reached 230°C was defined as a solid-phase polycondensation time. A polyester obtained when the solid-phase polycondensation time was set to 16 hours had an intrinsic viscosity of 0.760 dL/g. Table 1 summarizes the results.

(Comparative Example 1)

The same process as that of Example 1 was performed except that the addition of the solution of ammonium metatungstate in ethylene glycol to the first esterification reaction tank was omitted in Example 1. Table 1 shows the results.

(Example 2)

The same process as that of Example 1 was performed except the following points: in Example 1, the addition of the solution of ammonium metatungstate in ethylene glycol to the first esterification reaction tank, and the addition of the solution of orthophosphoric acid in ethylene glycol and the solution of diantimony trioxide in ethylene glycol from the second esterification reaction tank to the melt polycondensation reaction tank were omitted, a solution of tetrabutyl titanate in ethylene glycol (concentration: 0.075 mass% in terms of a titanium atom) was added from the vapor phase portion of the slurry preparation tank in an amount of 8 massppm in terms of titanium with respect to a polyester prepolymer to be obtained, and, furthermore, a solution of magnesium acetate tetrahydrate in ethylene glycol (concentration : 0.040 mass% in terms of a magnesium atom)) and a solution of ethyl acid phosphate in ethylene glycol (concentration: 0.030 mass% in terms of a phosphorus atom) were continuously added to a reaction liquid phase in amounts of 8 massppm in terms of magnesium with respect to the polyester prepolymer to be obtained and 8 massppm in terms of phosphorus with respect to the polyester prepolymer to be obtained. Table 1 shows the results.

[Table 1]

Table 1

| | Prepolymer physical properties | | | After solid-phase polycondensation |
|---|---|---|---|---|
| | IV (dL/g) | AV (equivalents/ton) | Particle diameter | IV (dL/g) |
| Example 1 | 0.211 | 16 | 1.0 | 0.760 |
| Comparative Example 1 | 0.209 | 143 | 1.0 | 0.567 |
| Example 2 | 0.216 | 45 | 0.9 | 0.712 |
| IV: intrinsic viscosity, AV: terminal carboxyl group concentration | | | | |

The results showed that the prepolymer of Comparative Example 1 had a larger terminal carboxyl group concentration than those of the prepolymers of Examples 1 and 2, so the prepolymer of Comparative Example 1 had a small intrinsic viscosity after solid-phase polycondensation (small solid-phase polycondensation rate).

(Example 3)

Polyester prepolymer particles were produced using a PET prepolymer continuous production apparatus including: a slurry preparation tank having a stirring machine, an ethylene glycol loading pipe, and a terephthalic acid loading pipe; respective pipes for transferring slurry and an esterification reaction product to the respective esterification reaction tanks; perfect mixing type first and second esterification reaction tanks each having a stirring machine, a separation column, a raw material receiving port, a catalyst loading pipe, and a reaction product transferring pipe; a pipe for transferring an esterification reaction product (oligomer) to a melt polycondensation reaction tank; a perfect mixing type first melt polycondensation reaction tank having a stirring machine, a separation column, an oligomer receiving port, and a catalyst loading pipe; plug flow type second and third melt polycondensation reaction tanks each having a stirring machine, a separation column, a polymer receiving port, and a polymer extracting port; and a granulating device for taking a prepolymer in a strand shape from the extracting port out of a die plate through a gear pump and cutting the prepolymer in a strand shape under water cooling (using a Pelletizer (P-USG 100) manufactured by Rieter AutomaticGmbH as a strand cutter) . All reactions were each performed under a nitrogen atmosphere.

In the slurry preparation tank, terephthalic acid, isophthalic acid, and ethylene glycol were stirred and mixed, and a solution of tetra-n-butyl titanate in EG was added to the mixture, whereby slurry containing terephthalic acid, isophthalic acid, and ethylene glycol at a molar ratio of 0. 97 : 0. 03 : 1.5 and containing tetra-n-butyl titanate in an amount of 8 massppm in terms of a titanium atom with respect to a polyester prepolymer to be obtained was prepared. In addition, 400 parts by mass of bis- (β-hydroxyethyl) terephthalate were loaded into the first esterification reaction tank, and were melted under a nitrogen atmosphere. The slurry prepared in the slurry preparation tank was continuously charged at a rate of 135 parts by mass/h into the reaction tank with its temperature and pressure kept at 262°C and 96 kPaG, respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, an esterification reaction was performed under a temperature of 260°C and a pressure of 5 kPaG for a residence time of 1.5 hours. The resultant was continuously transferred to the perfect mixing type first melt polycondensation reaction tank through the transferring pipe.

In the first melt polycondensation reaction tank, a reaction was performed under a temperature of 270°C and a pressure of 3.8 kPaA for a residence time of 1.0 hour, and the resultant was continuously transferred to the second melt polycondensation reaction tank through the transferring pipe. In the second melt polycondensation reaction tank, a melt polycondensation reaction was performed under a temperature of 275°C and a pressure of 3.8 kPaA for a residence time of 1.0 hour, and the resultant was transferred to the third melt polycondensation reaction tank through the transferring pipe. In the third melt polycondensation reaction tank, a melt polycondensation reaction was performed under a temperature of 275°C and a pressure of 3.8 kPaA for a residence time of 1.2 hours.

The molten polyester prepolymer thus obtained was introduced as it was to a die head through the gear pump and the extracting port, and was ejected in a strand shape from a die hole. The strand-shaped polyester prepolymer was cooled in a stream of water formed by the strand cutter (Pelletizer (P-USG 100) manufactured by Rieter Automatic GmbH) to solidify, and was cut with the rotary teeth and fixed teeth of the cutter, whereby particles were obtained. Particles after a lapse of 15 hours or more from the initiation of the melt polycondensation reaction were defined as samples to be subjected to solid-phase polycondensation.

The polyester prepolymer particles (samples) had an intrinsic viscosity (IV) of 0.323 dL/g, and had a terminal carboxyl group concentration (AV) of 26 equivalents/ton, isophthalic acid and diethylene glycol copolymerization amount of 2.9 mol% and 2.2 mol%, respectively, and an average particle diameter of 1.1 mm.

30 g of the prepolymer particles were mounted on a stainless vat having a rectangular bottom face measuring 130 mm by 170 mm and a depth of 30 mm. The vat was placed in an inert oven containing a gas having a temperature of 180°C (type IPHH-201M manufactured by Tabai Espec Corp.), and the particles were subjected to a crystallization treatment for 1 hour in a stream of nitrogen at a flow rate of 50 NL/min and a temperature of 180°C in the inert oven. Here, the symbol "NL" represents the volume (L) of a gas at 0°C and 101.3 kPa.

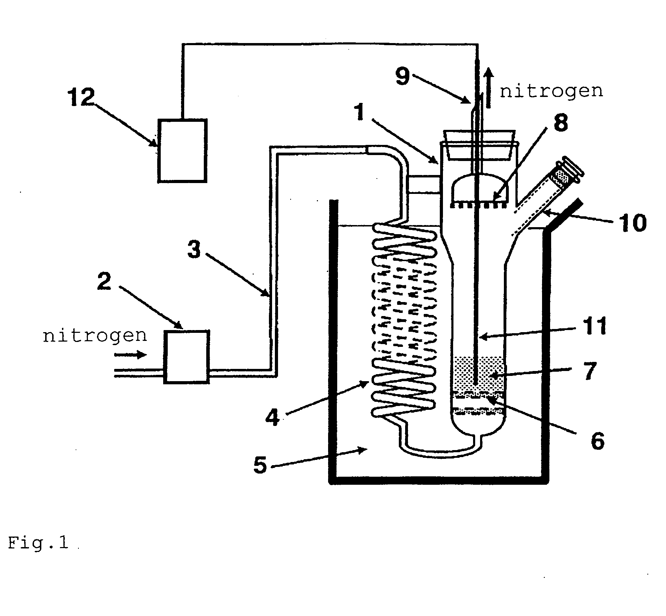

The prepolymer particles subjected to the above crystallization treatment were treated with heat using a heat treatment apparatus made of glass shown in Fig. 1.
Hereinafter, the heat treatment apparatus will be described.
In the heat treatment apparatus shown in Fig. 1, a sample is loaded into a heat treatment tube (1) made of glass and having a sample loading portion with an inner diameter of 45 mm. Nitrogen heated by oil charged into an oil bath (5) is introduced into the heat treatment tube (1) via a gas flow meter (2), a nitrogen-introducing tube (3), and a nitrogen-preheating tube (4). Introduced nitrogen is dispersed by a dispersion plate (6) at a lower portion of the heat treatment tube (1), and is turned into an upward flow having a substantially uniform linear velocity in the heat treatment tube (1) to pass through a sample layer (7). Nitrogen that has passed through the sample layer (7) is exhausted from a gas purge port (9) to the outside of the heat treatment tube (1) via a filter (8) at an upper portion of the heat treatment tube (1).
The heat treatment tube (1) has a branch (10), and the sample can be loaded into or collected from an opening portion (typically closed with a glass stopper) at an upper portion of the branch. In addition, the temperature of the sample in the heat treatment tube (1) can be measured with a temperature gauge (12) provided withathermocouple (11). Since the temperature in the heat treatment tube (1) was lower than the temperature of the oil in the oil bath by 2°C in the ranges of the temperature and superficial linear velocity of this example, the temperature of the oil was adjusted to be higher than a target solid-phase polycondensation temperature by 2°C.

30 g of the prepolymer particles after the above crystallization treatment were loaded into the heat treatment tube (1) from the opening portion of the branch (10), and air in the tube was replaced with nitrogen circulating in the tube. After that, the flow rate of nitrogen in the heat treatment tube (1) was set with the gas flow meter (2) in order that the superficial linear velocity of nitrogen (the term "superficial linear velocity" as used herein refers to a superficial linear velocity at the sample layer (the same holds true for the following description)) might be 0.30 m/sec at 210°C. Then, the heat treatment apparatus was immersed in the first oil bath (5) containing oil with its temperature adjusted to 212°C for 2 hours.
Subsequently, the flow rate of nitrogen was changed in order that the superficial linear velocity of nitrogen might be 1.0 m/sec at 235°C. Then, the heat treatment apparatus was transferred to the second oil bath (5) containing oil with its temperature adjusted to 237°C, and was immersed in the bath for 10 minutes.
Subsequently, the flow rate of nitrogen was changed in order that the superficial linear velocity of nitrogen might be 0.30 m/sec at 230°C. Then, the heat treatment apparatus was transferred to the third oil bath (5) containing oil with its temperature adjusted to 232°C, and was immersed in the bath for 24 hours.
The polyester thus obtained had an intrinsic viscosity of 0.850 dL/g. Table 2 summarizes the results.

(Comparative Example 2)

The same process as that of Example 3 was performed except that the position at which the solution of tetra-n-butyl titanate in EG in Example 3 was changed from the slurry preparation tank to the transferring tube between the second esterification reaction tank and the first melt polycondensation reaction tank. Table 2 shows the results.

[Table 2]

Table 2

| | Prepolymer physical properties | | | After solid-phase polycondensation |
|---|---|---|---|---|
| | IV (dL/g) | AV (equivalents /ton) | Particle diameter (mm) | IV (dL/g) |
| Example 3 | 0.323 | 26 | 1.1 | 0.850 |
| Comparative Example 2 | 0.330 | 60 | 1.1 | 0.723 |
| IV: intrinsic viscosity, AV: terminal carboxyl group concentration | | | | |

The results showed that the prepolymer of Comparative Example 2 had a larger terminal carboxyl group concentration than that of the prepolymer of Example 3, so the prepolymer of Comparative Example 2 had a small intrinsic viscosity after solid-phase polycondensation (small solid-phase polycondensation rate).

(Polyester Prepolymer Production Example)

<Production of Polyester Prepolymer A>

A polyester continuous production apparatus was used, which included: a slurry preparation tank having a stirring machine, an ethylene glycol loading pipe, and a terephthalic acid loading pipe; a pipe for transferring slurry to a perfect mixing type first esterification reaction tank; the perfect mixing type first and a second esterification reaction tanks each having a stirring machine, a separation column, a raw material receiving port, a catalyst loading pipe, and a reaction product transferring pipe; a pipe for transferring an esterification reaction product (oligomer) to a melt polycondensation reaction tank; a perfect mixing type first melt polycondensation reaction tank having a stirring machine, a separation column, an oligomer receiving port, and a catalyst loading pipe; plug flow type second and third melt polycondensation reaction tanks each having a stirring machine, a separation column, a polymer receiving port, and a polymer extracting port; and a granulating device for taking a polymer in a strand shape from the extracting port out of a die plate through a gear pump and cutting the polymer in a strand shape under water cooling (using a Pelletizer (P-USG 100) manufactured by Rieter Automatic GmbH as a strand cutter).

First, in the slurry preparation tank, slurry containing terephthalic acid and ethylene glycol at a molar ratio of 1 : 1.5 was prepared by adding a solution of orthophosphoric acid in ethylene glycol (concentration: 0.50 mass% in terms of a phosphorus atom) to terephthalic acid in order that a phosphorus concentration in a polyester prepolymer to be obtained in terms of a phosphorus atom might be 22 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts by mass /h into the reaction tank with its temperature and pressure kept at 262°C and 96 kPaG (hereinafter, the symbol "G" represents a pressure relative to the atmospheric pressure), respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, an esterification reaction was performed under a temperature of 260°C and a pressure of 5 kPaG for a residence time of 1.5 hours while a solution of diantimony trioxide in ethylene glycol (concentration: 1.8 mass% in terms of an antimony atom) was continuously added in order that an antimony concentration in the polyester prepolymer to be obtained in terms of an antimony atom might be 183 massppm. The resultant was continuously transferred to the perfect mixing type first melt polycondensation reaction tank through the transferring pipe. In the first melt polycondensation reaction tank, a reaction was performed at a pressure in the polycondensation reaction tank of 2.0 kPaA (hereinafter, the symbol "A" represents an absolute pressure) and a temperature in the polycondensation reaction tank of 278 °C for a residence time of 1.0 hour. The resultant polyester prepolymer was passed through the second melt polycondensation reaction tank and the third melt polycondensation reaction tank. The prepolymer was continuously taken in a strand shape from the polymer extracting port out of the die plate through the gear pump and cut in a strand shape under water flow, whereby 4,000 parts by mass of particles of Polyester Prepolymer A (average particle diameter 1.2 mm) were obtained.

Polyester Prepolymer A thus obtained had an intrinsic viscosity of 0.247 dL/g and a terminal carboxyl group concentration of 55 equivalents/ton.

<Production of Polyester Prepolymer B>

Polyester Prepolymer B was produced by using the same polyester continuous production apparatus as that used in the production of Polyester Prepolymer A.

First, in the slurry preparation tank, slurry containing terephthalic acid and ethylene glycol at a molar ratio of 1: 1.5 was prepared by adding a solution of tetrabutyl titanate in ethylene glycol (concentration: 0.075 mass% in terms of a titanium atom) to terephthalic acid in order that a titanium concentration in a polyester prepolymer to be obtained in terms of a titanium atom might be 8 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts bymass/h into the reaction tank with its temperature and pressure kept at 262°C and 96 kPaG, respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, a reaction was performed under a temperature of 260°C and a pressure of 5 kPaG for a residence time of 1.5 hours. The resultant was continuously transferred to the perfect mixing type first melt polycondensation reaction tank through the transferring pipe.

In the first melt polycondensation reaction tank, a reaction was performed at a pressure in the polycondensation reaction tank of 2. 5 kPaA and a temperature in the polycondensation reaction tank of 273°C for a residence time of 1.0 hour while a solution of magnesium acetate tetrahydrate in ethylene glycol (concentration: 0.040 mass% in terms of a magnesium atom) and a solution of ethyl acid phosphate in ethylene glycol (concentration: 0.030 mass% in terms of a phosphorus atom) were continuously added to the reaction liquid phase in order that a magnesium concentration in the polyester prepolymer to be obtained in terms of a magnesium metal atom might be 8 massppm and a phosphorus concentration in the polyester prepolymer to be obtained in terms of a phosphorus atom might be 8 massppm. The reaction product was continuously transferred to the second melt polycondensation reaction tank. In the second melt polycondensation reaction tank, a melt polycondensation reaction was performed at a pressure of 2.0 kPaA and a temperature of 275°C for a residence time of 1.0 hour, and the reaction product was continuously transferred to the third melt polycondensation reaction tank through the transferring pipe. In the third melt polycondensation reaction tank, a melt polycondensation reaction was performed at a pressure of 2.0 kPaA and a temperature of 275°C for a residence time of 1. 2 hours. The resultant polyester prepolymer was continuously taken in a strand shape from the extracting port out of the die plate through the gear pump and cut in a strand shape underwater flow, whereby 4,000 parts by mass of particles of Polyester Prepolymer B (average particle diameter 1.2 mm) were obtained. Polyester Prepolymer B thus obtainedhad an intrinsic viscosity of 0.373 dL/g and a terminal carboxyl group concentration of 31 equivalents/ton.

(Example 4)

30 g of the particles of Polyester Prepolymer A obtained in Polyester Prepolymer Production Example described above were spread on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the particles were subjected to a crystallization treatment at 180°C for 1 hour in a stream of nitrogen at a flow rate of 50 NL/min and a temperature of 180°C in the inert oven. Here, the symbol "NL" represents a volume (L) at 0°C and 1 atmospheric pressure. Polyester Prepolymer A after the crystallization treatment had an intrinsic viscosity of 0. 250 dL/g. The prepolymer was treated with heat in a heat treatment apparatus made of glass shown in Fig. 1. In the heat treatment apparatus shown in Fig. 1, a sample is loaded into a heat treatment tube (1) made of glass and having a sample loading portion with an inner diameter of 45 mm. Nitrogen heated by oil charged into an oil bath (5) is introduced into the heat treatment tube (1) via a flow meter (2), a nitrogen-introducing tube (3), and a nitrogen-preheating tube (4) . Introduced nitrogen is dispersed by a dispersion plate (6) at a lower portion of the heat treatment tube (1), and is turned into an upward flow having a substantially uniform linear velocity in the heat treatment tube (1) to pass through a sample layer (7). Nitrogen that has passed through the sample layer (7) is exhausted from a gas purge port (9) to the outside of the heat treatment tube (1) via a filter (8) at an upper portion of the heat treatment tube (1). The heat treatment tube (1) has a branch (10), and the sample can be loaded into or collected from an opening portion (typically closed with a glass stopper) at an upper portion of the branch. In addition, the temperature of the sample in the heat treatment tube (1) can be measured with a temperature gauge (12) provided with a thermocouple (11) . Since the temperature in the heat treatment tube (1) was lower than the temperature of the oil in the oil bath by 2°C in the ranges of the temperature and superficial linear velocity of this example, the temperature of the oil bath was adjusted to be higher than a target solid-phase polycondensation temperature by 2°C.

30 g of the particles of Polyester Prepolymer A after the crystallization treatment were loaded into the heat treatment tube (1) from the opening portion of the branch (10), and air in the tube was replaced with nitrogen circulating in the tube. After that, the flow rate of nitrogen in the heat treatment tube (1) was set with the flow meter (2) in order that the superficial linear velocity of nitrogen (the term "superficial linear velocity" as used herein refers to a superficial linear velocity at a portion corresponding to an inner diameter of 45 mm (the same holds true for the following description)) might be 0.30 m/sec at 200°C. Then, the heat treatment apparatus was immersed in the first oil bath (5) adjusted to 202°C. The time point is defined as the starting point of first-stage solid-phase polycondensation at 200°C. 4 hours after that, the sample for intrinsic viscosity measurement was collected from the opening portion of the branch (10). After the collection of the sample, the flow rate of nitrogen was changed in order that the superficial linear velocity of nitrogen might be 1.0 m/sec at 235°C, and the heat treatment apparatus was transferred to the second oil bath (5) adjusted to 237°C. The time point is defined as the starting point of a temperature increase step at 235°C. 10 minutes after that, the sample for intrinsic viscosity measurement was collected from the opening portion of the branch (10). After the collection of the sample, the flow rate of nitrogen was changed in order that the superficial linear velocity of nitrogen might be 0.30 m/sec at 230°C, and the heat treatment apparatus was transferred to the oil bath (5) adjusted to 232°C. The time point was defined as the starting point of second-stage solid-phase polycondensation at 230°C. The sample for intrinsic viscosity measurement was collected at a time point of each of 12 hours, 24 hours, and 36 hours after the starting point of the second-stage solid-phase polycondensation, and its intrinsic viscosity was measured at each time point. Table 3 shows conditions for the heat treatment and the results of the measurement. In the table, for example, a time period for the intrinsic viscosity (IV) to reach 0.747 dL/g (time to reach IV = 0.747) was determined by: connecting data near IV = 0.747 in the second-stage solid-phase polycondensation step with a straight line in orthogonal coordinates; defining a heat treatment time at IV = 0.747 as a second-stage solid-phase polycondensation step time; and adding a first-stage solid-phase polycondensation step time and a temperature increase step time to the second-stage solid-phase polycondensation step time. It should be noted that a crystallization step time is not included.

(Example 5)

The same process as that of Example 4 was performed except that: a temperature for the first-stage solid-phase polycondensation in Example 4 was set to 210°C by setting the temperature of the first oil bath to 212°C; and a time for the solid-phase polycondensation in Example 4 was changed to 2 hours. Table 3 shows the results.

(Example 6)

The same process as that of Example 5 was performed except that a time for the first-stage solid-phase polycondensation in Example 5 was changed to 4 hours. Table 3 shows the results.

(Comparative Example 3)

After the loading of the sample in Example 5, the first-stage solid-phase polycondensation operation was completely omitted, and the temperature increase step and the second-stage solid-phase polycondensation were each performed in the same manner as in Example 5. Table 3 shows the results.

(Comparative Example 4)

The same process as that of Example 5 was performed except that a temperature for the first-stage solid-phase polycondensation in Example 5 was changed to 220°C by setting the temperature of the first oil bath to 222°C. Table 3 shows the results.

(Comparative Example 5)

The same process as that of Example 5 was performed except the following points: in Example 5, after the first-stage solid-phase polycondensation, the flow rate of nitrogen was subsequently changed in a state where the heat treatment apparatus was immersed in the first oil bath (5) in order that the superficial linear velocity of nitrogen might be 1.0 m/sec at 220°C, the temperature of the oil in the oil bath (5) was continuously increased from 212°C to 232°C over 120 minutes, and, after 120 minutes had passed, the sample for intrinsic viscosity measurement was collected from the opening portion of the branch (10), the flow rate of nitrogen was subsequently changed in a state where the heat treatment apparatus was immersed in the first oil bath (5) in order that the superficial linear velocity of nitrogen might be 0.30 m/sec at 230°C, and the time point was defined as the starting point of the second-stage solid-phase polycondensation at 230°C. Table 3 shows the results.
[Table 3]

| | First-stage solid-phase polycondensation step | | | | Temperature increase step | | | | Second-stage solid-phase polycondensation step | | | | Time to reach IV=0.74 7 $\triangle$ IV=0.50 hours | Time to reach IV=0.7 77 $\triangle$ IV=0.5 30 hours | Time to reach IV=0.7 97 $\triangle$ IV=0.5 50 hours |
|---|---|---|---|---|---|---|---|---|---|---|---|---|---|---|---|
| | T1 °C | Reaction time hours | IV dL/g | $\triangle$IV dL/g | Th °C | Residence time minutes | IV dL/g | $\triangle$IV dL/g | T2 °C | After 12 hours IV dL/g | After 24 hours IV dL/g | After 36 hours IV dL/g | | | |
| Example 4 | 200 | 4 | 0.314 | 0.064 | 235 | 10 | 0.338 | 0.024 | 230 | 0.763 | 0.959 | - | 15.7 | 17.0 | 18.2 |
| Example 5 | 210 | 2 | 0.309 | 0.059 | 235 | 10 | 0.327 | 0.018 | 230 | 0.778 | 0.971 | 1.052 | 13.3 | 14.1 | 15.3 |
| Example 6 | 210 | 4 | 0.348 | 0.098 | 235 | 10 | 0.372 | 0.024 | 230 | 0.833 | 0.989 | 1.090 | 13.9 | 14.7 | 15.2 |
| Comparative Example 3 | --- | 0 | --- | --- | 235 | 10 | 0.273 | --- | 230 | 0.675 | 0.866 | 0.929 | 16.7 | 18.6 | 19.8 |
| Comparative Example 4 | 220 | 2 | 0.362 | 0.112 | 235 | 10 | 0.375 | 0.013 | 230 | 0.719 | 0.845 | 0.905 | 16.8 | 19.7 | 21.6 |
| Comparative Example 5 | 210 | 2 | 0.309 | 0.059 | 210-230 | 120 | 0.420 | 0.111 | 230 | 0.695 | 0.887 | 0.920 | 19.3 | 21.1 | 22.4 |

(Example 7)

The same process as that of Example 5 was performed except that: Polyester Prepolymer A in Example 5 was replaced with Polyester Prepolymer B; and the time at which the sample was collected in the second-stage solid-phase polycondensation step was changed to a time point of each of 8 hours, 16 hours, and 32 hours after the starting point of the step. Polyester Prepolymer B after the crystallization treatment had an intrinsic viscosity IV of 0.380 dL/g. Table 4 shows the results.

(Example 8)

The same process as that of Example 7 was performed except that, in Example 7, after the first-stage solid-phase polycondensation, the temperature increase step at 235°C was omitted, and the second-stage solid-phase polycondensation at 230°C was immediately performed. Table 4 shows the results.

(Example 9)

The same process as that of Example 7 was performed except the following points: in Example 7, after the first-stage solid-phase polycondensation, the flow rate of nitrogen was subsequently changed in a state where the heat treatment apparatus was immersed in the first oil bath (5) in order that the superficial linear velocity of nitrogen might be 1.0 m/sec at 220°C, the temperature of the oil in the oil bath (5) was continuously increased from 212°C to 232°C over 20 minutes, and, after 20 minutes had passed, the sample for intrinsic viscosity measurement was collected from the opening portion of the branch (10), the flow rate of nitrogen was subsequently changed in a state where the heat treatment apparatus was immersed in the first oil bath (5) in order that the superficial linear velocity of nitrogen might be 0.30 m/sec at 230°C, and the time point was defined as the starting point of the second-stage solid-phase polycondensation at 230°C. Table 4 shows the results.

(Comparative Example 6)

The same process as that of Example 7 was performed except that, in Example 7, after the loading of the sample, the first-stage solid-phase polycondensation and the temperature increase step at 235°C were omitted, and the second-stage solid-phase polycondensation at 230°C was immediately performed. Table 4 shows the results.
[Table 4]

| | First-stage solid-phase polycondensation step | | | | Temperature increase step | | | | Second-stage solid-phase polycondensation step | | | | Time to reach IV=0.87 3 △ IV=0.50 0 hours | Time to reach IV=0.90 △ IV=0.53 0 hours |
|---|---|---|---|---|---|---|---|---|---|---|---|---|---|---|
| | T1 °C | Reaction time hours | IV dL/g | △IV dL/g | Th °C | Residence time minutes | IV dL/g | △IV dL/g | T2 °C | After 8 hours IV dL/g | After 16 hours IV dL/g | After 32 hours IV dL/g | | |
| Example 7 | 210 | 2 | 0.448 | 0.068 | 235 | 10 | 0.483 | 0.035 | 230 | 0.875 | 1.035 | --- | 10.1 | 11.6 |
| Example 8 | 210 | 2 | 0.448 | 0.068 | --- | 0 | --- | 0.000 | 230 | 0.830 | 0.982 | --- | 12.3 | 13.8 |
| Example 9 | 210 | 2 | 0.448 | 0.068 | 210 -23 0 | 30 | 0.495 | 0.047 | 230 | 0.848 | 0.967 | --- | 12.2 | 14.2 |
| Comparative Example 6 | --- | 0 | --- | --- | --- | 0 | --- | --- | 230 | 0.809 | 0.899 | 1.021 | 13.7 | 16.5 |

In each of the examples and the comparative examples, it was able to take a sample after the heat treatment out of the heat treatment tube (1) with ease, and no fusion of the particles of the sample was observed.

In Comparative Example 3, only the second-stage solid-phase polycondensation step at a high temperature is the solid-phase polycondensation step, so a solid-phase polycondensation rate is small. In Comparative Example 4, a difference in solid-phase polycondensation temperature between the first-stage solid-phase polycondensation step and the second-stage solid-phase polycondensation step is lower than 15°C, so a solid-phase polycondensation rate is small. In Comparative Example 5, a difference between an intrinsic viscosity upon completion of the first-stage solid-phase polycondensation step and an intrinsic viscosity upon initiation of the second-stage solid-phase polycondensation step is 0.10 dL/g or more, so a solid-phase polycondensation rate is small. In Comparative Example 6, only the second-stage solid-phase polycondensation step at a high temperature is performed, so a solid-phase polycondensation rate is small.

(PET Prepolymer Production Example)

<Production of PET Prepolymer A>

A PET prepolymer continuous production apparatus was used, which included: a slurry preparation tank having a stirring machine, an ethylene glycol loading pipe, and a terephthalic acid loading pipe; pipes each for transferring slurry and an esterification reaction product to each an esterification reaction tank; a perfect mixing type first esterification reaction tank and a perfect mixing type second esterification reaction tank each having a stirring machine, a separation column, a raw material receiving port, a catalyst loading pipe, and a reaction product transferring pipe; a pipe for transferring an esterification reaction product (oligomer) to a melt polycondensation reaction tank; a perfect mixing type first melt polycondensation reaction tank having a stirring machine, a separation column, an oligomer receiving port, and a catalyst loading pipe; plug flow type second and third melt polycondensation reaction tanks each having a stirring machine, a separation column, a polymer receiving port, and a polymer extracting port; and a granulating device for taking a prepolymer in a strand shape from the extracting port out of a die plate through a gear pump and cutting the polymer in a strand shape under water cooling (using a Pelletizer (P-USG 100) manufactured by Rieter Automatic GmbH as a strand cutter).

First, in the slurry preparation tank, slurry containing terephthalic acid and ethylene glycol at a molar ratio of 1 : 1.5 was prepared by adding a solution of orthophosphoric acid in ethylene glycol (concentration: 0.50 mass% in terms of a phosphorus atom) to terephthalic acid in order that a phosphorus concentration in a PET prepolymer to be obtained in terms of a phosphorus atom might be 22 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts bymass/h into the reaction tank with its temperature and pressure kept at 262°C and 96 kPaG (hereinafter, the symbol "G" represents a pressure relative to the atmospheric pressure), respectively in order that an average residence time in terms of the PET prepolymer might be 4.5 hours. An esterification reaction was performed while produced water was removed by distillation from the separation column. The reaction liquid was continuously transferred to the second esterification reaction tank.

In the second esterification reaction tank, an esterification reaction was performed under a temperature of 260°C and a pressure of 5 kPaG for a residence time of 1.5 hours while a solution of diantimony trioxide in ethylene glycol (concentration: 1.8 mass% in terms of an antimony atom) was continuously added in order that an antimony concentration in the PET prepolymer to be obtained in terms of an antimony atom might be 183 massppm. The resultant was continuously transferred to the perfect mixing type first melt polycondensation reaction tank through the transferring pipe. In the first melt polycondensation reaction tank, a reaction was performed at a pressure in the polycondensation reaction tank of 2.5 kPaA (hereinafter, the symbol "A" represents an absolute pressure) and a temperature in the polycondensation reaction tank of 273°C for a residence time of 1.0 hour. The resultant PET prepolymer was passed through the second melt polycondensation reaction tank and the third melt polycondensation reaction tank. The prepolymer was continuously taken in a strand shape from the polymer extracting port out of the die plate through the gear pump and cut in a strand shape under water cooling, whereby 4,000 parts by mass of particles of PET Prepolymer A (average particle diameter 1.2 mm) were obtained.

PET Prepolymer A thus obtained had an intrinsic viscosity of 0.247 dL/g and a terminal carboxyl group concentration of 55 equivalents/ton.

<Production of PET Prepolymer B>

PET Prepolymer B was produced using the same PET prepolymer continuous production apparatus as that used in the production of PET Prepolymer A.

First, in the slurry preparation tank, slurry containing terephthalic acid and ethylene glycol at a molar ratio of 1 : 1.5 was prepared by adding a solution of tetrabutyl titanate in ethylene glycol (concentration: 0.075 mass% in terms of a titanium atom) to terephthalic acid in order that a titanium concentration in a PET prepolymer to be obtained in terms of a titanium atom might be 8 massppm. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts bymass/h into the reaction tank with its temperature and pressure kept at 262°C and 96 kPaG, respectively in order that an average residence time in terms of the polyester prepolymer might be 4.5 hours. An esterification reaction was performed while produced water was removed by distillation from the separation column. The reaction liquid was continuously transferred to the second esterification reaction tank.

In the second esterification reaction tank, a reaction was performed under a temperature of 260°C and a pressure of 5 kPaG for a residence time of 1.5 hours. The reaction product was continuously transferred to the perfect mixing type first melt polycondensation reaction tank through the transferring pipe.

In the first melt polycondensation reaction tank, a reaction was performed at a pressure in the polycondensation reaction tank of 4. 5 kPaA and a temperature in the polycondensation reaction tank of 271°C for a residence time of 1.0 hour while a solution of magnesium acetate tetrahydrate in ethylene glycol (concentration: 0.040 mass% in terms of a magnesium atom)) and a solution of ethyl acid phosphate in ethylene glycol (concentration: 0.030 mass% in terms of a phosphorus atom) were continuously added to the reaction liquid phase in order that a magnesium concentration in the PET to be obtained in terms of a magnesium metal atom might be 8 massppm and a phosphorus concentration in the PET to be obtained in terms of a phosphorus atom might be 8 massppm. The reaction product was continuously transferred to the second melt polycondensation reaction tank. In the second melt polycondensation reaction tank, a melt polycondensation reaction was performed at a pressure of 3.5 kPaA and a temperature of 274°C for a residence time of 1.0 hour, and the reaction product was continuously transferred to the third melt polycondensation reaction tank through the transferring pipe.

In the third melt polycondensation reaction tank, a melt polycondensation reaction was performed at a pressure of 3.5 kPaA and a temperature of 275°C for a residence time of 1.2 hours. The resultant PET prepolymer was continuously taken in a strand shape from the extracting port out of the die plate through the gear pump and cut in a strand shape under water cooling, whereby 4,000 parts by mass of particles of PET Prepolymer B (average particle diameter 1.2 mm) were obtained.

PET Prepolymer B thus obtained had an intrinsic viscosity of 0.308 dL/g and a terminal carboxyl group concentration of 35 equivalents/ton.

<Crystallization step>

30 g of the particles of PET Prepolymer A obtained in the above Production Example described above were spread on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the particles were subjected to a crystallization treatment at 180°C for 1 hour in a stream of nitrogen at a flow rate of 50 NL/min and a temperature of 180°C in the inert oven. Here, the symbol "NL" represents a volume (L) at 0°C and 1 atmospheric pressure.

The sample of PET Prepolymer A after the crystallization treatment had an intrinsic viscosity of 0.250 dL/g.

The particles of PET Prepolymer B were similarly subjected to a crystallization treatment. PET Prepolymer B as a sample after the crystallization treatment had an intrinsic viscosity IV of 0.321 dL/g.

(Example 10)

The particles of PET Prepolymer A subjected to the above crystallization treatment were treated with heat in the heat treatment apparatus made of glass shown in Fig. 1.

The heat treatment apparatus is as described above.

30 g of the particles of PET Prepolymer A after the crystallization treatment were loaded into the heat treatment tube (1) from the opening portion of the branch (10), and air in the tube was replaced with nitrogen circulating in the tube. After that, the flow rate of nitrogen in the heat treatment tube (1) was set with the flow meter (2) in order that the superficial linear velocity of nitrogen (the term "superficial linear velocity" as used herein refers to a superficial linear velocity at a portion corresponding to an inner diameter of 45 mm (the same holds true for the following description)) might be 0. 30 m/sec at 200°C. Then, the heat treatment apparatus was immersed in the first oil bath (5) adjusted to 202°C . The time point is defined as the starting point of first-stage solid-phase polycondensation at 200°C. 4 hours after that, the sample for intrinsic viscosity measurement was collected from the opening portion of the branch (10). After the collection of the sample, the flow rate of nitrogen was changed in order that the superficial linear velocity of nitrogen might be 1.0 m/sec at 235°C, and the heat treatment apparatus was transferred to the second oil bath (5) adjusted to 237°C. The time point is defined as the starting point of a temperature increase step at 235°C. 10 minutes after that, the sample for intrinsic viscosity measurement was collected from the opening portion of the branch (10).

After the collection of the sample, the flow rate of nitrogen was changed in order that the superficial linear velocity of nitrogen might be 0.30 m/sec at 230°C, and the heat treatment apparatus was transferred to the oil bath (5) adjusted to 232°C. The time point was defined as the starting point of second-stage solid-phase polycondensation at 230°C. The sample for intrinsic viscosity measurement was collected at a time point of each of 12 hours, 24 hours, and 36 hours after the starting point of the second-stage solid-phase polycondensation. The intrinsic viscosity of the sample for measurement collected after each of the first-stage solid-phase polycondensation, the temperature increase step, and the second-stage solid-phase polycondensation was measured. Table 5 shows conditions for the heat treatment and the results of the measurement. In the table, a time to reach the intrinsic viscosity IV = 0.90 dL/g was determined by: connecting data near IV = 0. 90 with a straight line in orthogonal coordinates; defining a heat treatment time at IV = 0.90 as a second-stage solid-phase polycondensation step time; and adding a first-stage solid-phase polycondensation time and a temperature increase step time to the second-stage solid-phase polycondensation step time. A crystallization step time is not included.

(Example 11)

The same process as that of Example 10 was performed except that: a temperature for the first-stage solid-phase polycondensation in Example 10 was set to 210°C by setting the temperature of the first oil bath to 212°C; and a time for the solid-phase polycondensation in Example 10 was changed to 2 hours. Table 5 shows the results.

(Example 12)

The same process as that of Example 11 was performed except that a time for the first-stage solid-phase polycondensation in Example 11 was changed to 4 hours. Table 5 shows the results.

(Example 13)

The same process as that of Example 11 was performed except that a time for the first-stage solid-phase polycondensation in Example 11 was changed to 8 hours. Table 5 shows the results.

(Comparative Example 7)

After the loading of the particles of PET Prepolymer A after the crystallization treatment in Example 11, the first-stage solid-phase polycondensation operation was completely omitted, and the temperature increase step and the second-stage solid-phase polycondensation were each performed in the same manner as in Example 11. Table 5 shows the results.

(Comparative Example 8)

The same process as that of Example 11 was performed except that a temperature for the first-stage solid-phase polycondensation in Example 11 was changed to 220°C by setting the temperature of the first oil bath to 222°C. Table 5 shows the results.

(Example 14)

The same process as that of Example 11 was performed except that: the particles of PET Prepolymer A after the crystallization treatment in Example 11 were replaced with the particles of PET Prepolymer B; and the time at which the sample was collected in the second-stage solid-phase polycondensation step was changed to a time point of each of 8 hours; 16 hours, and 32 hours after the starting point of the step. Table 6 the results. In the table, a time to reach the intrinsic viscosity IV = 0. 80 dL/g was determined by: connecting data near IV = 0.80 with a straight line in orthogonal coordinates; defining a heat treatment time at IV = 0.80 as a second-stage solid-phase polycondensation step time; and adding a first-stage solid-phase polycondensation time and a temperature increase step time to the second-stage solid-phase polycondensation step time. A crystallization step time is not included.

(Example 15)

The same process as that of Example 14 was performed except that, in Example 14, after the first-stage solid-phase polycondensation, the temperature increase step at 235°C was omitted, and the second-stage solid-phase polycondensation at 230°C was immediately performed. Table 6 shows the results.

(Comparative Example 9)

The same process as that of Example 15 was performed except that a temperature for the first-stage solid-phase polycondensation in Example 15 was changed to 220°C by setting the temperature of the first oil bath to 222°C. Table 6 shows the results.

(Comparative Example 10)

The same process as that of Example 14 was performed except that, in Example 14, after the loading of the particles of PET Prepolymer B after the crystallization treatment, the first-stage solid-phase polycondensation and the temperature increase step at 235°C were omitted, and the second-stage solid-phase polycondensation at 230°C was immediately performed. Table 6 shows the results.

[Table 5]

Table 5

| | First-stage solid-phase polycondensation step | | | | Temperature increase step | | | Second-stage solid-phase polycondensation step | | | | Time to reach IV=0.90 hours |
|---|---|---|---|---|---|---|---|---|---|---|---|---|
| | T1 °C | Reaction time hours | IV dL/g | $\triangle$IV dL/g | Th °C | Residence time minutes | IV dL/g | T2 °C | After 12 hours dL/g | After 24 hours dL/g | After 36 hours | |
| Example 10 | 200 | 4 | 0.314 | 0.064 | 235 | 10 | 0.338 | 230 | 0.763 | 0.959 | --- | 24.6 |
| Example 11 | 210 | 2 | 0.309 | 0.059 | 235 | 10 | 0.327 | 230 | 0.778 | 0.971 | 1.052 | 21.8 |
| Example 12 | 210 | 4 | 0.348 | 0.098 | 235 | 10 | 0.372 | 230 | 0.833 | 0.989 | 1.090 | 21.3 |
| Example 13 | 210 | 8 | 0.421 | 0.171 | 235 | 10 | 0.436 | 230 | 0.860 | 1.049 | --- | 22.7 |
| Comparative Example 7 | --- | 0 | --- | --- | 235 | 10 | 0.273 | 230 | 0.675 | 0.866 | 0.929 | 30.6 |
| Comparative Example 8 | 220 | 2 | 0.362 | 0.112 | 235 | 10 | 0.375 | 230 | 0.719 | 0.845 | 0.905 | 37.2 |

[Table 6]

Table 6

| | First-stage solid-phase polycondensation step | | | | Temperature increase step | | | Second-stage solid-phase polycondensation step | | | | Time to reach IV=0.80 hours |
|---|---|---|---|---|---|---|---|---|---|---|---|---|
| | T1 °C | Reaction time hours | IV dL/g | ΔIV dL/g | Th °C | Residence time minutes | IV dL/g | T2 °C | After 8 hours IV dL/g | After 16 hours IV dL/g | After 32 hours IV dL/g | |
| Example 14 | 210 | 2 | 0.407 | 0.086 | 235 | 10 | 0.942 | 230 | 0.792 | 0.853 | 0.976 | 12.3 |
| Example 15 | 210 | 2 | 0.407 | 0.086 | --- | 0 | --- | 230 | 0.760 | 0.816 | 0.936 | 15.7 |
| Comparative Example 9 | 220 | 2 | 0.440 | 0.119 | --- | 0 | --- | 230 | --- | 0.767 | 0.878 | 22.8 |
| Comparative Example 10 | --- | 0 | --- | --- | --- | 0 | --- | 230 | --- | 0.770 | 0.867 | 21.0 |

In each of the examples and the comparative examples, it was able to take a sample after the heat treatment out of the heat treatment tube (1) with ease, and no fusion of the particles of the sample was observed.

In Comparative Example 7, only the second-stage solid-phase polycondensation step at a high temperature is the solid-phase polycondensation step, so a solid-phase polycondensation reaction rate is small.

In each of Comparative Examples 8 and 9, a difference in solid-phase polycondensation temperature between the first-stage solid-phase polycondensation step and the second-stage solid-phase polycondensation step is lower than 15°C, so a solid-phase polycondensation reaction rate is small. In Comparative Example 10, only the second-stage solid-phase polycondensation step at a high temperature is performed, so a solid-phase polycondensation reaction rate is small.

(Example 16)

<Production of PET Prepolymer C>

PET Prepolymer C was produced with the PET prepolymer continuous production apparatus used in the production of PET Prepolymer A described above by: subjecting a dicarboxylic acid and a diol to an esterification reaction; additionally subjecting the resultant to a melt polycondensation reaction; taking the resultant PET prepolymer in a molten state in a strand shape out of a die plate; and cutting the prepolymer. A method for the production is specifically described below.

In the slurry preparation tank, slurry containing terephthalic acid and ethylene glycol at a molar ratio of 1 : 1.5 and containing tetra-n-butyl titanate in an amount in terms of a titanium atom of 4 massppm with respect to PET to be obtained was prepared. In addition, 400 parts by mass of bis-(β-hydroxyethyl)terephthalate were loaded into the first esterification reaction tank, and were melted under a nitrogen atmosphere. The slurry prepared in the slurry preparation tank was continuously charged at a rate of 135 parts by mass/h into the reaction tank with its temperature and pressure kept at 262°C and 96 kPaG (hereinafter, the symbol "G" represents a pressure relative to the atmospheric pressure), respectively in order that an average residence time in terms of the polyester prepolymer might be 4.5 hours. An esterification reaction was performed while produced water was removed from the separation column by distillation. The reaction liquid was continuously transferred to the second esterification reaction tank.

In the second esterification reaction tank, an esterification reaction was performed under a temperature of 260°C and a pressure of 5 kPaG for a residence time of 1.5 hours. The resultant was continuously transferred to the perfect mixing type first melt polycondensation reaction tank through the transferring pipe.

In the first melt polycondensation reaction tank, a reaction was performed under a temperature of 270°C and a pressure of 4.0 kPaA (the symbol "A" represents an absolute pressure) for a residence time of 1.0 hour, and the resultant was continuously transferred to the second melt polycondensation reaction tank through the transferring pipe. In the second melt polycondensation reaction tank, a melt polycondensation reaction was performed under a temperature of 270°C and a pressure of 4.0 kPaA for a residence time of 1.0 hour, and the resultant was transferred to the third melt polycondensation reaction tank through the transferring pipe. In the third melt polycondensation reaction tank, a melt polycondensation reaction was performed under a temperature of 270°C and a pressure of 4.0 kPaA for a residence time of 1.2 hours.

The molten PET prepolymer thus obtained was introduced to a die head as it was through the gear pump and the extracting pipe, and was taken in a strand shape out of a die hole. After having been cooled with water, the prepolymer was granulated with a Pelletizer (P-USG 100) manufactured by Rieter Automatic GmbH. A strand cut method was adopted as a method for the granulation; specifically, particles of PET Prepolymer C were obtained by: conveying the strand-shaped PET prepolymer in a cutter direction together with water while bringing the prepolymer into contact with water to cool the prepolymer; taking up the prepolymer by sandwiching the prepolymer between a pair of take-up rolls placed in front of a cutter having fixed teeth and rotary teeth; supplying the prepolymer to the cutter; and cutting the prepolymer with the cutter.

Here, the molten PET prepolymer was ejected in an amount of 60 kg/h, and had a temperature of 270°C. The prepolymer was ejected in a strand shape from a die plate perforated with four 3-mmφ circular die holes in a downward direction at an angle of 45° relative to a horizontal direction as an ejection direction.

The strand-shaped PET prepolymer was landed on a water cooling zone of a strand cutter through an air cooling distance of 100 mm or more, conveyed while being cooled with water at 50°C, taken up with the take-up rolls, and supplied to the cutter. The strand was taken up at a rate of 3.00 m/sec, a ratio between the number of revolutions of each of the take-up rolls and the number of revolutions of each of the rotary teeth of the cutter was adjusted, and the strand was granulated in order that each particle might have a length in a take-up direction of 1.0 mm.

As a result, the particles of PET Prepolymer C each having an elliptic cylinder shape close to a shape obtained by attaching semicircular columns to both terminals of a substantial rectangular parallelepiped having a length of 1.0 mm, a width of 1.3 mm, and a thickness of 0.9 mm were obtained. The particles had an intrinsic viscosity of 0.290 dL/g, a terminal carboxyl group concentration of 22 equivalents/ton, and a diethylene glycol copolymerization amount of 2.0 mol%, and had an average mass of 1.5 mg/particle. Hereinafter, the particles of PET Prepolymer C are referred to as "Prepolymer C".

<Heat treatment>

<Crystallization step>

30 g of Prepolymer C described above were spread on a stainless vat having a rectangular bottom face measuring 130 mm by 170 mm and a depth of 30 mm. The vat was placed in an inert oven containing a gas having a temperature of 180°C (type IPHH-201 M manufactured by Tabai Espec Corp.), and the prepolymer was subjected to a crystallization treatment at Tx = 180°C for 1 hour in a stream of nitrogen at a flow rate of 50 NL/min and a temperature of 180°C in the inert oven. Here, the symbol "NL" represents a volume (L) at 0°C and 1 atmospheric pressure. The sample after the crystallization treatment had an intrinsic viscosity of 0.290 dL/g and a crystallinity of 53 mass%.

<Heat treatment apparatus>

The above sample obtained by subjecting Prepolymer C to the crystallization treatment was treated with heat in the heat treatment apparatus made of glass shown in Fig. 1. The heat treatment apparatus is as described above.

<First-stage solid-phase polycondensation step>

30 g of Prepolymer C particles after the crystallization treatment described above were loaded into the heat treatment tube (1) from the opening portion of the branch (10), and air in the tube was replaced with nitrogen circulating in the tube. After that, the flow rate of nitrogen in the heat treatment tube (1) was set with the gas flow meter (2) in order that the superficial linear velocity of nitrogen (the term "superficial linear velocity" as used herein refers to the superficial linear velocity of a sample layer (the same holds true for the following description)) might be 0.30 m/sec at 210°C. Then, the heat treatment apparatus was immersed in the first oil bath (5) containing oil with its temperature adjusted to 212°C. The time point is defined as the starting point of a first-stage solid-phase polycondensation step (T1 = 210°C). 2 hours after that, about 0. 3 g of the sample for intrinsic viscosity measurement was collected from the opening portion of the branch (10).

<Temperature increase step>

After the collection of the sample, the flow rate of nitrogen was changed in order that the superficial linear velocity of nitrogen might be 1.0 m/sec at 235°C, and the heat treatment apparatus was transferred to the second oil bath (5) containing oil with its temperature adjusted to 237°C. The time point is defined as the starting point of a temperature increase step (T2 = 235°C) . Since it took 10 minutes for the temperature of the sample to reach 235°C, a temperature increase from T1 to (T1 + 15°C) was performed within 10 minutes. 10 minutes after the initiation of the temperature increase step, the sample for intrinsic viscosity measurement was collected from the opening portion of the branch (10).

<Second-stage solid-phase polycondensation step>

After the collection of the sample, the flow rate of nitrogen was changed in order that the superficial linear velocity of nitrogen might be 0.30 m/sec at 230°C, and the heat treatment apparatus was transferred to the third oil bath (5) containing oil with its temperature adjusted to 232°C. The time point was defined as the starting point of a second-stage solid-phase polycondensation step (T3 = 230°C). The sample for intrinsic viscosity measurement was collected at a time point of each of 8 hours, 16 hours, and 32 hours after the starting point of the second-stage solid-phase polycondensation step as required.
The intrinsic viscosityof the sample for measurement collected after each of the first-stage solid-phase polycondensation step, the temperature increase step, and the second-stage solid-phase polycondensation step was measured. Table 7 [VII-A] shows conditions for the heat treatment and the results of the measurement. In the table, a time to reach the intrinsic viscosity IV = 0.80 dL/g was determined by: connecting data around IV = 0.80 with a straight line in orthogonal coordinates; determining a heat treatment time at IV = 0.80 by interpolation; defining the time as a second-stage solid-phase polycondensation step time; and adding a first-stage solid-phase polycondensation time and a temperature increase step time to the second-stage solid-phase polycondensation step time. A crystallization step time is not included.

(Comparative Example 11)

The same process as that of Example 16 was performed except that no temperature increase step was performed in Example 16. Table 7[VII-A] shows the results.
In the case of this example, the temperature increase step at 235°C was not performed, so the time to reach IV = 0.80 dL/g was longer than that in the case of Example 16.

(Example 17)

A prepolymer was produced in the same manner as in <Production of PET Prepolymer C> of Example 16 except that the ejection amount of the molten PET prepolymer in <Production of PET Prepolymer C> of Example 16 was changed to 100 kg/h.
As a result, PET Prepolymer Particles C' each having an elliptic cylinder shape close to a shape obtained by attaching semicircular columns to both terminals of a substantial rectangular parallelepiped having a length of 1.0 mm, a width of 1.6 mm, and a thickness of 1.2 mm were obtained. Particles C' had an intrinsic viscosity of 0.290 dL/g, a terminal carboxyl group concentration of 22 equivalents/ton, and a diethylene glycol copolymerization amount of 2.0 mol%, and had an average mass of 2.3 mg/particle.
The same treatment as that of <Heat treatment> of Example 16 was performed except that PET Prepolymer Particles C were used. Table 7[VII-A] shows the results.

(Comparative Example 12)

The same process as that of Example 17 was performed except that no temperature increase step was performed in Example 17. Table 7[VII-A] shows the results.
In the case of this example, the temperature increase step at 235°C was not performed, so the time to reach IV = 0.80 dL/g was longer than that in the case of Example 17. It should be noted that the time to reach IV = 0.80 dL/g was estimated by: drawing a straight line connecting the results of the measurement of the intrinsic viscosity at 16 hours and 32 hours after the starting point of the second-stage solid-phase polycondensation step; and extrapolating the line to IV = 0.80.

(Comparative Example 13)

The same process as that of Example 16 was performed except that the temperature for the temperature increase step in Example 16 was changed to 220°C. Table 7[VII-A] shows the results.
In the case of this example, a temperature difference between the first-stage solid-phase polycondensation step and the temperature increase step was as small as 10°C and hence did not satisfy (Eq. 1), so the time to reach IV = 0.80 dL/g was longer than that in the case of Example 16.

(Comparative Example 14)

The same process as that of Example 16 was performed except that a rate of temperature increase and a time for temperature increase in the temperature increase step in Example 16 were set to 0.42°C/min and 60 minutes, respectively. Table 7[VII-A] shows the results.
In the case of this example, a time to reach 235°C exceeded 30 minutes, so the time to reach IV = 0.80 dL/g was longer than that in the case of Example 16.

(Example 18)

<Production of PET Prepolymer D>

PET prepolymer particles were obtained in the same manner as in Example 16 except the following points: in <Production of PET Prepolymer C> of Example 16, the slurry to be prepared in the slurry preparation tank was changed to slurry containing terephthalic acid, isophthalic acid, and ethylene glycol at a molar ratio of 0.97: 0.03 : 1.5 and containing tetra-n-butyl titanate in an amount in terms of a titanium atom of 8 massppm with respect to PET to be obtained, the pressure in the first melt polycondensation reaction tank was changed to 3.8 kPaA, the temperature and the pressure in each of the second and third melt polycondensation reaction tanks were changed to 275°C and 3.8 kPaA, respectively, the die plate was changed to one having ten die holes, and the ejection amount of a molten polyester was changed to 78 kg/h. As a result, the particles of PET Prepolymer D each having an elliptic cylinder shape close to a shape obtained by attaching semicircular columns to both terminals of a substantial rectangular parallelepiped having a length of 1.0 mm, a width of 1.0 mm, and a thickness of 0.7 mm were obtained. The particles had an intrinsic viscosity of 0.323 dL/g, a terminal carboxyl group concentration of 26 equivalents/ton, and an isophthalic acid copolymerization amount and a diethylene glycol copolymerization amount of 2.9 mol% and 2.2 mol%, respectively, and had an average mass of 1.4 mg/particle. Hereinafter, the particles of PET Prepolymer D are referred to as "Prepolymer D".

<Heat treatment>

A <heat treatment> was performed in the same manner as in Example 16 except that: the sample was changed to Prepolymer D described above; conditions for the first-stage solid-phase polycondensation step, the temperature increase step, and the second-stage solid-phase polycondensation step were changed as shown in Table 7[VII-B]; and the time points at which the sample for intrinsic viscosity measurement was collected in the second-stage solid-phase polycondensation step were changed to the time points of 16 hours and 32 hours after the starting point of the step. The sample after the crystallization treatment had an intrinsic viscosity of 0.331 dL/g. Table 7[VII-B] shows conditions for the heat treatment and the results of the measurement.

(Comparative Example 15)

The same process as that of Example 18 was performed except that no temperature increase step was performed in Example 18. Table 7[VII-B] shows the results.
In the case of this example, the temperature increase step at 225°C was not performed, so the time to reach IV = 0.80 dL/g was longer than that in the case of Example 18.

(Example 19)

A <heat treatment> was performed in the same manner as in Example 18 except that: conditions for the first- and second-stage solid-phase polycondensation steps in Example 18 were changed as shown in Table 7[VII-C]; and the time point at which the sample for intrinsic viscosity measurement was collected in the second-stage solid-phase polycondensation step in Example 18 was changed to the time point of 24 hours after the starting point of the step. Table 7[VII-C] shows the results.
In the table, a time to reach the intrinsic viscosity IV = 0.70 dL/g was determined by: connecting data at 24 hours and data immediately before the data with a straight line in orthogonal coordinates; determining a heat treatment time at IV = 0.70 by interpolation; defining the time as a second-stage solid-phase polycondensation step time; and adding a first-stage solid-phase polycondensation time and a temperature increase step time to the second-stage solid-phase polycondensation step time. A crystallization step time is not included.

(Comparative Example 16)

The same process as that of Example 19 was performed except that no temperature increase step was performed in Example 19. Table 7[VII-C] shows the results.
In the case of this example, the temperature increase step at 235°C was not performed, so the time to reach IV = 0.70 dL/g was longer than that in the case of Example 19.

(Example 20)

The same process as that of Example 19 was performed except that conditions for the first-stage solid-phase polycondensation step in Example 19 were changed as shown in Table 7 [VII-C]. Table 7[VII-C] shows the results.

(Comparative Example 17)

The same process as that of Example 20 was performed except that no temperature increase step was performed in Example 20. Table 7[VII-C] shows the results.
In the case of this example, the temperature increase step at 235°C was not performed, so the time to reach IV = 0.70 dL/g was longer than that in the case of Example 20.

[Table 7]

[VII-A]

| | Mass of prepolymer particles mg/particle | First-stage solid-phase polycondensation step | | | Temperature increase step | | | Second-stage solid-phase polycondensation step | | | | Time to reach IV=0.80 hours |
| | | T1 °C | Reaction time hours | IV dL/g | T2 °C | Time for temperature increase minutes | IV dL/g | T3 °C | After 8 hours IV dL/g | After 16 hours IV dL/g | After 32 hours IV dL/g | |
|---|---|---|---|---|---|---|---|---|---|---|---|---|
| Example 16 | 1.5 | 210 | 2 | 0.380 | 235 | 10 | 0.392 | 230 | 0.708 | 0.817 | 0.942 | 16.9 |
| Comparative Example 11 | 1.5 | 210 | 2 | 0.380 | --- | --- | --- | 230 | 0.600 | 0.694 | 0.816 | 31.9 |
| Example 17 | 2.3 | 210 | 2 | 0.352 | 235 | 10 | 0.360 | 230 | 0.657 | 0.765 | 0.879 | 20.8 |
| Comparative Example 12 | 2.3 | 210 | 2 | 0.352 | --- | --- | --- | 230 | 0.557 | 0.637 | 0.762 | 38.9 |
| Comparative Example 13 | 1.5 | 210 | 2 | 0.380 | 220 | 10 | 0.384 | 230 | 0.610 | 0.701 | 0.822 | 26.9 |
| Comparative Example 14 | 1.5 | 210 | 2 | 0.380 | 235 | 60 | 0.419 | 230 | 0.652 | 0.737 | 0.850 | 24.1 |

[VII-B]

| | Mass of prepolymer particles mg/particle | First-stage solid-phase polycondensation step | | | Temperature increase step | | | Second-stage solid-phase polycondensation step | | | Time to reach IV=0.80 hours |
| | | T1 °C | Reaction time hours | IV dL/g | T2 °C | Time for temperature increase minutes | IV dL/g | T3 °C | After 16 hours IV dL/g | After 32 hours IV dL/g | |
|---|---|---|---|---|---|---|---|---|---|---|---|
| Example 18 | 1.4 | 200 | 4 | 0.390 | 225 | 10 | 0.403 | 220 | 0.781 | 0.904 | 22.6 |
| Comparative Example 15 | 1.4 | 200 | 4 | 0.390 | --- | --- | --- | 220 | 0.696 | 0.806 | 35.1 |

[VII-C]

| | Mass of prepolymer particles | First-stage solid-phase polycondensation step | | | Temperature increase step | | | Second-stage solid-phase polycondensation step | | Time to reach IV=0.70 |
| | | T1 | Reaction time | IV | T2 | Time for temperature increase | IV | T3 | After 24 hours IV | |
| | mg/particle | °C | hours | dL/g | °C | minutes | dL/g | °C | dL/g | hours |
| Example 19 | 1.4 | 210 | 2 | 0.399 | 235 | 10 | 0.423 | 215 | 0.850 | 17.7 |
| Comparative Example 16 | 1.4 | 210 | 2 | 0.399 | --- | --- | --- | 215 | 0.702 | 25.8 |
| Example 20 | 1.4 | 220 | 2 | 0.453 | 235 | 10 | 0.472 | 215 | 0.774 | 20.3 |
| Comparative Example 17 | 1.4 | 220 | 2 | 0.453 | --- | --- | --- | 215 | 0.746 | 22.2 |

(Example 21)

<Fusion test>

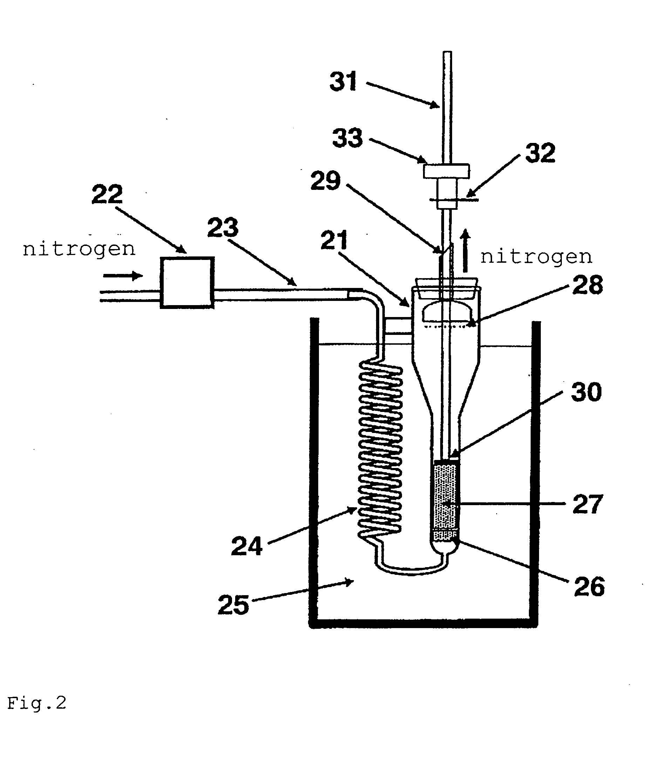

To investigate the fusion properties of PET particles after a heat treatment, PET particles after the performance of the temperature increase step of Example 16 (hereinafter, referred to as "Particles C after Temperature Increase Step") were subjected to a fusion test with a fusion test apparatus shown in Fig. 2 in a state where a load was applied to the particles.
Hereinafter, the fusion test apparatus will be described.
In the fusion test apparatus shown in Fig. 2, a sample is loaded into a heat treatment tube (21) made of glass and having a sample loading portion with an inner diameter of 14 mm. Nitrogen heated by oil charged into an oil bath (25) is introduced into the heat treatment tube (21) via a gas flowmeter (22), a nitrogen-introducing tube (23), and a nitrogen-preheating tube (24). Introduced nitrogen is dispersed by a dispersion plate (26) at a lower portion of the heat treatment tube (21), and is turned into an upward flow having a substantially uniform linear velocity in the heat treatment tube (21) to pass through a sample layer (27). Nitrogen that has passed through the sample layer (27) is exhausted from a gas purge port (29) to the outside of the heat treatment tube (21) via a filter (28) at an upper portion of the heat treatment tube (21). Here, it was confirmed that the temperature of the sample in the heat treatment tube (21) was equal to the temperature of the oil in the oil bath by previously loading another sample in the tube and measuring the temperature of the other sample with a temperature gauge provided with a thermocouple. In addition, a stainless hollow supporting column (31) can be mounted on the sample layer (27) through a stainless metal gauze (30). In addition, a seat (33) on which a cone is to be mounted by using a pin (32) can be fixed to the supporting column (31) (the mass of the supporting column (31) is 80 g, and the total mass of the pin (32) and the seat (33) is 42 g).
8 g of Particles C after Temperature Increase Step as a sample were loaded into the heat treatment tube (21), and the metal gauze (30) and the supporting column (31) were mounted on the tube. After that, air in the tube was replaced with nitrogen circulating in the tube. After that, the flow rate of nitrogen in the heat treatment tube (21) was set with the gas flow meter (22) in order that the superficial linear velocity of nitrogen (the term "superficial linear velocity" as used herein refers to a superficial linear velocity at the sample layer portion (the same holds true for the following description)) might be 0.40 m/sec at 230°C. Then, the fusion test apparatus was immersed in the oil bath (25) adjusted to 235°C. The temperature of the sample layer was set to 235°C by keeping the immersion for 10 minutes. After that, the temperature of the oil charged into the oil bath (25) was reduced to 230°C over 10 minutes. The time point is defined as the starting point of a fusion test at 230°C. A load to be applied to the sample layer (27) was only a load corresponding to the mass of the supporting column (30) (80 g-weight) for a time period of 1 hour from the starting point. 1 hour after the starting point, the pin (32) and the seat (33) were attached to the supporting column (30) so that the load to be applied to the sample might be 122 g-weight. 1.5 hours after the starting point, a cone was mounted on the seat (33) so that the load might be 160 g-weight. After that, the load was increased to 196 g-weight, 231 g-weight, 265 g-weight, 298 g-weight, and 330 g-weight every 0.5 hour, and was 1,039 g-weight for a time period commencing on a time point of 4.5 hours after the starting point and ending on a time point of 5 hours after the starting point. 5 hours after the starting point, the fusion test apparatus was lifted from the oil bath, and was left standing to cool for 10 minutes . After that, the circulation of nitrogen was stopped, and the cone (including the supporting column, the pin, and the seat) was removed.
The sample was extracted on a sieve having an aperture of 2.0 mm, and was silently classified, whereby a fusion ratio (mass ratio of the sample on the sieve) was measured. The fusion ratio was 0.4 mass%. The result showed that the sample was excellent in fusion resistance at 230°C under a load.

(Example 22)

<Fusion test>

The same process as that of Example 21 was performed except the following points: in Example 21, the sample was changed to PET particles after the performance of the temperature increase step of Example 19, the flow rate of nitrogen was set with the flow meter (22) in order that the superficial linear velocity might be 0.40 m/sec at 215°C, the temperature to which the oil bath (25) adjusted to 235°C was reduced over 10 minutes was changed to 215°C, and the time point was defined as the starting point of a fusion resistance test at 215°C.
The fusion ratio was 11 mass%.

(Example 23)

Steps up to the temperature increase step were performed in the same manner as in Example 19 except that a time for the first-stage solid-phase polycondensation step was changed to 4 hours. The resultant PET particles had an intrinsic viscosity of 0.476 dL/g.

<Fusion test>

The same process as that of Example 22 was performed except that the sample in Example 22 was changed to the above PET particles having an intrinsic viscosity of 0.476 dL/g.
The fusion ratio was 0.3 mass%. The result showed that the sample was more excellent in fusion resistance than the sample used in Example 22.

(Example 24)

Prepolymer D described in Example 18 was subjected to such a heat treatment test that the heat treatment of the prepolymer in a solid state was continuously performed. That is, Prepolymer D was continuously supplied to a perfect mixing type fluidized bed. The prepolymer was subjected to a first-stage crystallization treatment (crystallization step) under an air atmosphere having a superficial linear velocity of 3.2 m/sec and a temperature of 120°C for an average residence time of 60 minutes, and was continuously discharged. The resultant sample was continuously supplied to a fluidized bed having plug flow property via a transferring pipe. The sample was subjected to a second-stage crystallization treatment (crystallization step) under a nitrogen atmosphere having a superficial linear velocity of 1.3 m/sec and a temperature of 180°C for an average residence time of 15 minutes, and was continuously discharged. The resultant sample was continuously supplied to a moving bed via a transferring pipe. The sample was subjected to a first-stage solid-phase polycondensation treatment (first-stage solid-phase polycondensation step) under a nitrogen atmosphere having a temperature of 210°C for an average residence time of 120 minutes, and was continuously discharged. The resultant sample was left standing to cool under a nitrogen atmosphere once. The sample after the cooling had an intrinsic viscosity of 0.347.dL/g.
The sample which had been left standing to cool once was continuously supplied to a perfect mixing type fluidized bed. The temperature of the sample was increased again under an air atmosphere having a superficial linear velocity of 3.2 m/sec and a temperature of 180°C for an average residence time of 10 minutes, and the sample was continuously discharged. The resultant sample was continuously supplied to a fluidized bed having plug flow property via a transferring pipe. The sample was subjected to a temperature increase treatment (temperature increase step) under a nitrogen atmosphere having a superficial linear velocity of 1.6 m/sec and a temperature of 240°C for an average residence time of 15 minutes, and was continuously discharged. The sample immediately in front of the outlet of the temperature increase step had a temperature of 232°C. The resultant sample was continuously supplied to a moving bed via a transferring pipe. The sample was subjected to a second-stage solid-phase polycondensation treatment under a nitrogen atmosphere having a temperature of 215°C for an average residence time of 14 hours, and was continuously discharged.
The resultant sample was left standing to cool under a nitrogen atmosphere. The sample after the cooling had an intrinsic viscosity of 0.737 dL/g.

(Example 25)

In Example 24, the sample was collected at the outlet of the temperature increase step. The sample had an intrinsic viscosity of 0. 386 dL/g. 30 g of the sample were loaded into the heat treatment tube (1) of the heat treatment apparatus shown in Fig. 1 from the opening portion of the branch (10), and air in the tube was replaced with nitrogen circulating in the tube. After that, the flow rate of nitrogen in the heat treatment tube (1) was set with the gas flow meter (2) in order that the superficial linear velocity of nitrogen might be 0.30 m/sec at 210°C. Then, the heat treatment apparatus was immersed in the first oil bath (5) adjusted to 212°C. The time point is defined as the starting point of second-stage solid-phase polycondensation at 210°C. The sample for intrinsic viscosity measurement was collected from the opening portion of the branch (10) at a time point of each of 32 hours and 64 hours after the starting point of the second-stage solid-phase polycondensation.
The intrinsic viscosities of the sample were 0.741 dL/g and 0.853 dL/g, respectively. In addition, time periods for the intrinsic viscosities to reach 0.70 dL/g and 0.80 dL/g was 30.6 hours and 51.1 hours, respectively.
It should be noted that, in this example, the first-stage solid-phase polycondensation step and the temperature increase step were performed in a continuous moving bed at 210°C and a continuous moving bed at 232°C, respectively, and the second-stage solid-phase polycondensation step was performed in a batch fixed bed at 210°C.

(Comparative Example 18)

In Example 24, after the first-stage solid-phase polycondensation treatment, the sample was left standing to cool under a nitrogen atmosphere before being collected. The sample had an intrinsic viscosity of 0. 347 dL/g. A heat treatment was performed in the same manner as in Example 25 except that the aforementioned sample was used, and the sample for intrinsic viscosity measurement was collected.

The intrinsic viscosities of the sample were 0.681 dL/g and 0.777 dL/g, respectively. In addition, time periods for the intrinsic viscosities to reach 0.70 dL/g and 0.80 dL/g was 40.3 hours and 73.7 hours, respectively.

In this comparative example, no temperature increase step was performed, with the result that a solid-phase polycondensation reaction rate was smaller than that in Example 25.

It should be noted that, in this example, the first-stage solid-phase polycondensation step was performed in a continuous moving bed at 210°C, no temperature increase step was performed, and the second-stage solid-phase polycondensation step was performed in a batch fixed bed at 210°C.

The present application has been made to claim priority based on each of Japanese Patent Application No. 2005-307326 filed on the twenty-first day of October, 2005, Japanese Patent Application No. 2005-253286 filed on the first day of September, 2005, Japanese Patent Application No. 2005-259383 filed on the seventh day of September, 2005, and Japanese Patent Application No. 2006-129284 filed on the eighth day of May, 2006, and the above patent applications are incorporated herein by reference.

**Claims**

1. A method of producing a polyester, comprising:

   (a) an esterification step of subjecting dicarboxylic acid components mainly composed of terephthalic acid and diol components mainly composed of ethylene glycol to an esterification reaction in the presence of an esterification reaction catalyst to provide an oligomer;
   (b) a melt polycondensation step of subjecting the resultant oligomer to a melt polycondensation reaction to provide a polyester prepolymer;
   (c) a granulation step of granulating the resultant polyester prepolymer to provide polyester prepolymer particles; and
   (d) a heat treatment step of subjecting the resultant polyester prepolymer particles to a solid-phase polycondensation reaction to provide the polyester,

   wherein the method satisfies the following requirements 1) to 3):

   1) each of the steps (a), (b), and (c) is a continuous process;
   2) the polyester prepolymer particles obtained in the step (c) have an intrinsic viscosity of 0.18 dL/g or more to 0.40 dL/g or less; and
   3) the polyester prepolymer particles obtained in the step (c) have a terminal carboxyl group concentration of 1 equivalent or more to 50 equivalents or less per one ton of the particles.

2. A method of producing a polyester according to claim 1, wherein the melt polycondensation reaction by the continuous process of the step (b) is performed in one or two stages.

3. A method of producing a polyester according to claim 1 or 2, wherein the granulation method of the step (c) is a dropping method.

4. A method of producing a polyester according to claim 1 or 2, wherein the granulation method of the step (c) is a strand cut method.

5. A method of producing a polyester according to any one of claims 1 to 4, wherein the polyester prepolymer particles obtained in the step (c) have an average particle diameter of 0.1 mm or more to 3.0 mm or less.

6. A method of producing a polyester according to any one of claims 1 to 5, wherein the esterification reaction catalyst in the step (a) contains a tungsten compound and/or a titanium compound.

7. A method of producing a polyester according to any one of claims 1 to 6, wherein the polyester obtained in the step (d) has an intrinsic viscosity of 0.70 dL/g or more.

8. A method of producing a polyester according to any one of claims 1 to 7, wherein the step (d) is a continuous process.

9. A method of producing a polyester, comprising performing a heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester,
   wherein the heat treatment is divided into n stages, and the following conditions are satisfied:

   (1) a temperature ($T_j$) in a j-th stage of the heat treatment is 190°C or higher and 230°C or lower, and a value for an increase in intrinsic viscosity in the j-th stage is 0.03 dL/g or more;
   (2) at least one combination of the j-th stage and a k-th stage of the heat treatment in which the temperature ($T_j$ (°C)) in the j-th stage and a temperature ($T_k$ (°C)) in the k-th stage satisfy the following (Eq. 1a) is present:

   $$(\text{Eq. 1a}) \quad T_j + 15 \leq T_k \leq 245;$$

   (3) a difference between an intrinsic viscosity upon completion of the j-th stage and an intrinsic viscosity upon initiation of the k-th stage in the combination of the j-th stage and the k-th stage is 0.10 dL/g or less; and
   (4) n represents an integer of 2 or more, and j and k represent integers satisfying $1 \leq j < k \leq n$.

10. A method of producing a polyester according to claim 9, wherein a c-th stage involving crystallization of the polyester is present prior to the j-th stage, and a temperature ($T_{ca}$ (°C)) in the c-th stage satisfies the following (Eq. 2a):

    $$(\text{Eq. 2a}) \quad 100 \leq T_{ca} \leq 200.$$

11. A method of producing a polyester according to claim 10, wherein the c-th stage is performed in a fluidized bed.

12. A method of producing a polyester according to any one of claims 9 to 11, wherein an h-th stage is present between the j-th stage and the k-th stage, and a temperature ($T_{ha}$ (°C)) in the h-th stage satisfies the following (Eq. 3a):

    $$(\text{Eq. 3a}) \quad T_k \leq T_{ha} \leq 250.$$

13. A method of producing a polyester according to claim 12, wherein the h-th stage is performed in a fluidized bed.

14. A method of producing a polyester according to any one of claims 9 to 13, wherein the heat treatment is continuously performed.

15. A method of producing a polyester according to any one of claims 9 to 14, wherein the j-th stage and/or the k-th stage is performed in a continuous moving bed.

16. A method of producing a polyester according to any one of claims 9 to 15, wherein the polyester prepolymer has an average particle diameter of 0.5 mm or more and 3.0 mm or less.

17. A method of producing a polyester according to any one of claims 9 to 16, wherein the polyester prepolymer has a terminal carboxyl group concentration of 100 equivalents/ton or less.

18. A method of producing a polyester according to any one of claims 9 to 17, wherein the polyester comprises a titanium compound.

19. A method of producing a polyester, comprising performing a heat treatment of a polyester prepolymer having an intrinsic viscosity of 0.18 dL/g or more and 0.40 dL/g or less in a solid state to increase the intrinsic viscosity of the polyester prepolymer by 0.50 dL/g or more to obtain the polyester, wherein:

   the heat treatment includes all of a first stage of crystallizing the polyester prepolymer at a temperature $T_{1a}$ (°C), a second stage of performing solid-phase polycondensation of the crystallized polyester prepolymer at a temperature $T_{2a}$ (°C), a third stage of increasing a temperature of the product obtained in the second stage to a temperature T3a (°C), and a fourth stage of performing solid-phase polycondensation of the product obtained in the third stage at a temperature T4a (°C) in the stated order;

a value for an increase in intrinsic viscosity in the second stage is 0.03 dL/g or more;

a difference between an intrinsic viscosity upon completion of the second stage and an intrinsic viscosity upon initiation of the fourth stage is 0.10 dL/g or less; and

the temperatures T1a, T2a, T3a, and T4a (°C) satisfy the following (Eq. 4a) to (Eq. 7a):

$$\text{(Eq. 4a)} \quad 100 \leq T1a \leq 200;$$

$$\text{(Eq. 5a)} \quad 190 \leq T2a \leq 230;$$

$$\text{(Eq. 6a)} \quad T4a \leq T3a \leq 250;$$

and

$$\text{(Eq. 7a)} \quad T2a + 15 \leq T4a \leq 245.$$

20. A method of producing a polyethylene terephthalate, comprising performing a heat treatment of a polyethylene terephthalate prepolymer having an intrinsic viscosity of 0.18 dL/g or more and 0.40 dL/g or less in a solid state to provide a polyethylene terephthalate having an intrinsic viscosity of 0.70 dL/g or more,

wherein the heat treatment includes (1) a first-stage solid-phase polycondensation step and (2) a second-stage solid-phase polycondensation step below in the stated order:

(1) first-stage solid-phase polycondensation step;

a step of treating the polyethylene terephthalate prepolymer with heat at a temperature (T1b) of 200°C or higher and 225°C or lower under an inert gas atmosphere or reduced pressure for an average residence time of 0.5 hour or more and 10 hours or less so that a value for an increase in intrinsic viscosity of the prepolymer is 0.03 dL/g or more; and

(2) second-stage solid-phase polycondensation step;

a step of treating the prepolymer after the first-stage solid-phase polycondensation step with heat at a temperature (T2b) of 215°C or higher and 240°C or lower under an inert gas atmosphere or reduced pressure for an average residence time of 2 hours or more,

provided that the temperatures T1b (°C) and T2b (°C) satisfy the following (Eq. 1b):

$$T1b + 15 \leq T2b \quad \text{(Eq. 1b)}.$$

21. A method of producing a polyethylene terephthalate according to claim 20, wherein a crystallization step of crystallizing part of the polyethylene terephthalate prepolymer by treating the prepolymer with heat at a temperature (Tcb) of 140°C or higher and 200°C or lower is provided prior to the first-stage solid-phase polycondensation step.

22. A method of producing a polyethylene terephthalate according to claim 20 or 21, wherein the heat treatment further includes a step (temperature increase step) of increasing a temperature of the prepolymer after the first-stage solid-phase polycondensation step under a temperature (Thb) condition of T1b (°C) or higher and 250°C or lower and under an inert gas atmosphere or reduced pressure for an average residence time of 30 minutes or less between the first-stage solid-phase polycondensation step and the second-stage solid-phase polycondensation step.

23. A method of producing a polyethylene terephthalate according to any one of claims 20 to 22, wherein the heat treatment in the solid state is continuously performed.

24. A method of producing a polyethylene terephthalate according to any one of claims 20 to 23, wherein the first-stage solid-phase polycondensation step and/or the second-stage solid-phase polycondensation step is performed in a continuous moving bed.

25. A method of producing a polyethylene terephthalate according to any one of claims 21 to 24, wherein the crystallization step is performed in a fluidized bed.

26. A method of producing a polyethylene terephthalate according to any one of claims 22 to 25, wherein the temperature increase step is performed in a fluidized bed.

27. A method of producing a polyethylene terephthalate according to any one of claims 20 to 26, wherein the polyethylene terephthalate prepolymer has an average particle diameter of 0.5 mm or more and 3.0 mm or less.

28. A method of producing a polyethylene terephthalate according to any one of claims 20 to 27, wherein the polyethylene terephthalate prepolymer has a terminal carboxyl group concentration of 100 equivalents/ton or less.

29. A method of producing a polyethylene terephthalate according to any one of claims 20 to 28, wherein the polyethylene terephthalate comprises a titanium compound.

30. A method of producing a polyethylene terephthalate, comprising performing a heat treatment of a polyethylene terephthalate prepolymer having an intrinsic viscosity of 0.18 dL/g or more and 0. 40 dL/g or less in a solid state to provide an intrinsic viscosity of 0.70 dL/g or more,
wherein the heat treatment in the solid state comprises a first-stage solid-phase polycondensation step, a temperature increase step, and a second-stage solid-phase polycondensation step in the stated order, and the respective steps satisfy the following conditions (1) to (3):

(1) the first-stage solid-phase polycondensation step comprises a step of treating the polyethylene terephthalate prepolymer with heat under an inert gas atmosphere or reduced pressure, and a temperature (T1c) of the heat treatment is 190°C or higher and 225°C or lower;
(2) the temperature increase step comprises a step of increasing a temperature of the polyethylene terephthalate prepolymer after the first-stage solid-phase polycondensation step under an inert gas atmosphere or reduced pressure from a temperature equal to or lower than the temperature (T1c) of the heat treatment of the first-stage solid-phase polycondensation step to a temperature (T2c), the temperature of the polyethylene terephthalate prepolymer is increased from the temperature T1c (°C) to (T1c + 15)°C within 30 minutes, and the temperatures T1c (°C) and T2c (°C) satisfy the following (Eq. 1c) and (Eq. 2c):

$$\text{T1c+15} \leq \text{T2c} \quad (\text{Eq. 1c})$$

, and

$$205°C \leq \text{T2c} \leq 240°C \quad (\text{Eq. 2c})$$

; and
(3) the second-stage solid-phase polycondensation step comprises a step of treating the polyethylene terephthalate prepolymer after the first-stage solid-phase polycondensation step and the temperature increase step with heat under an inert gas atmosphere or reduced pressure, and a temperature (T3c) of the heat treatment is 190°C or higher and 240°C or lower.

31. A method of producing a polyethylene terephthalate according to claim 30, wherein the heat treatment further includes a crystallization step prior to the first-stage solid-phase polycondensation step, and the crystallization step comprises a step of treating the polyethylene terephthalate prepolymer with heat at a temperature (Tx) of 110°C or higher and 200°C or lower.

32. A method of producing a polyethylene terephthalate according to claim 30 or 31, wherein the polyethylene terephthalate prepolymer to be subjected to the second-stage solid-phase polycondensation step has an intrinsic viscosity of 0.35 dL/g or more.

**33.** A method of producing a polyethylene terephthalate according to any one of claims 30 to 32, wherein the heat treatment in the solid state is continuously performed.

**34.** A method of producing a polyethylene terephthalate according to any one of claims 30 to 33, wherein the first-stage solid-phase polycondensation step and/or the second-stage solid-phase polycondensation step is performed in a continuous moving bed.

**35.** A method of producing a polyethylene terephthalate according to any one of claims 31 to 34, wherein the crystallization step is performed in a fluidized bed.

**36.** A method of producing a polyethylene terephthalate according to any one of claims 30 to 35, wherein the temperature increase step is performed in a fluidized bed.

**37.** A method of producing a polyethylene terephthalate according to any one of claims 30 to 36, wherein the polyethylene terephthalate prepolymer is comprised of particles having an average mass of 0.1 mg/particle or more and 30 mg/particle or less.

**38.** A method of producing a polyethylene terephthalate according to any one of claims 30 to 37, wherein the polyethylene terephthalate prepolymer has a terminal carboxyl group concentration of 100 equivalents/ton or less.

**39.** A method of producing a polyethylene terephthalate according to any one of claims 30 to 38, wherein the polyethylene terephthalate comprises a titanium compound.

Fig.1

Fig.2

## INTERNATIONAL SEARCH REPORT

| | International application No. |
|---|---|
| | PCT/JP2006/317256 |

| A. CLASSIFICATION OF SUBJECT MATTER |
|---|
| C08G63/78(2006.01)i |
| |
| According to International Patent Classification (IPC) or to both national classification and IPC |

| B. FIELDS SEARCHED |
|---|
| Minimum documentation searched (classification system followed by classification symbols) |
| C08G63/78 |
| |
| Documentation searched other than minimum documentation to the extent that such documents are included in the fields searched |
|    Jitsuyo Shinan Koho     1922-1996   Jitsuyo Shinan Toroku Koho   1996-2006 |
|    Kokai Jitsuyo Shinan Koho   1971-2006   Toroku Jitsuyo Shinan Koho   1994-2006 |
| |
| Electronic data base consulted during the international search (name of data base and, where practicable, search terms used) |
| WPI/L |

| C. DOCUMENTS CONSIDERED TO BE RELEVANT |
|---|

| Category* | Citation of document, with indication, where appropriate, of the relevant passages | Relevant to claim No. |
|---|---|---|
| A | JP 46-003192 B1 (Toray Industries, Inc.), 26 January, 1971 (26.01.71), Full text (Family: none) | 1-39 |
| A | JP 53-073288 A (Teijin Ltd.), 29 June, 1978 (29.06.78), Full text (Family: none) | 1-39 |
| A | JP 10-139873 A (Mitsui Chemicals, Inc.), 26 May, 1998 (26.05.98), Full text & KR 98/024491 A     & TW 387915 A & CN 1176264 A | 1-39 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 November, 2006 (10.11.06) | 21 November, 2006 (21.11.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2006/317256 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 10-110027 A  (Mitsubishi Chemical Corp.),<br>28 April, 1998 (28.04.98),<br>Full text<br>(Family: none) | 1-39 |
| A | JP 2004-143442 A  (Mitsubishi Chemical Corp.),<br>20 May, 2004 (20.05.04),<br>Full text<br>(Family: none) | 1-39 |
| A | JP 2004-285350 A  (Toyobo Co., Ltd.),<br>14 October, 2004 (14.10.04),<br>Full text<br>(Family: none) | 1-39 |
| P,A | JP 2005-325270 A  (Mitsubishi Chemical Corp.),<br>24 November, 2005 (24.11.05),<br>Full text<br>(Family: none) | 1-39 |

Form PCT/ISA/210 (continuation of second sheet) (April 2005)

**INTERNATIONAL SEARCH REPORT**

| International application No. |
| --- |
| PCT/JP2006/317256 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
    because they relate to subject matter not required to be searched by this Authority, namely:

2. ☐ Claims Nos.:
    because they relate to parts of the international application that do not comply with the prescribed requirements to such an extent that no meaningful international search can be carried out, specifically:

3. ☐ Claims Nos.:
    because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:
    The invention of claims 1-8 and the invention of the other claims are common only in a point that prepolymer particles having a specific intrinsic viscosity are subjected to solid-phase polycondensation. This point, however, is not a novel technical feature as disclosed in document JP 2004-143442 A which is referred to in this report.
    Consequently, it is obvious that the invention of claims 1-8 and the invention of the other claims do not satisfy the requirement of unity of invention.

1. ☐ As all required additional search fees were timely paid by the applicant, this international search report covers all searchable claims.

2. ☒ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10512608 A
- JP SHO55133421 A
- JP 2000204145 A
- JP 3626758 B
- JP 2004067997 A
- JP 2004537622 A
- US 5408035 B
- JP 2003531259 A
- JP 2005307326 A
- JP 2005253286 A
- JP 2005259383 A
- JP 2006129284 A